(19)

Europäisches
Patentamt
European
Patent Office
Office européen
des brevets

(11) **EP 4 574 294 A1**

(12) **EUROPEAN PATENT APPLICATION**

(43) Date of publication:
**25.06.2025 Bulletin 2025/26**

(21) Application number: **24219470.2**

(22) Date of filing: **12.12.2024**

(51) International Patent Classification (IPC):
***B21D 24/02*** (2006.01)  ***G05B 19/416*** (2006.01)
***G05B 19/19*** (2006.01)

(52) Cooperative Patent Classification (CPC):
**G05B 19/416; B21D 24/02; B21D 24/14;
G05B 19/19**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.12.2023 JP 2023214089**

(71) Applicant: **Aida Engineering, Ltd.
Sagamihara-shi, Kanagawa 252-5181 (JP)**

(72) Inventors:
• **Yamazaki, Takumi
Sagamihara-shi, Kanagawa 2525181 (JP)**
• **Kaneko, Sotoyuki
Sagamihara-shi, Kanagawa 2525181 (JP)**

(74) Representative: **Grünecker Patent- und
Rechtsanwälte
PartG mbB
Leopoldstraße 4
80802 München (DE)**

(54) **DIE CUSHION CONTROL APPARATUS AND METHOD AND DIE CUSHION APPARATUS**

(57)   A compression spring model included in a processor in the die cushion control apparatus refers to a load characteristic curve of a compression spring when assuming that a hydraulic cylinder is a compression spring, generates a cushion load command in accordance with a spring constant and a deflection amount of a compression spring and generates a control command based on a deviation between the generated cushion load command and an actual cushion load. In accordance with the control command, the drive motor and the hydraulic pump are driven, and an upward load is generated on the cushion pin by the hydraulic cylinder. Thus, even when the cushion pin rises due to a setting error or the like for the press die height, the cushion load command decreases in accordance with the deflection amount of the compression spring and inhibits an abnormal pushing-up action of the cushion pin.

FIG. 3

EP 4 574 294 A1

**Description**

BACKGROUND OF THE INVENTION

Field of the Invention

The presently disclosed subject matter relates to a die cushion control apparatus and method and a die cushion apparatus and particularly relates to a technology that prevents pushing-up of a cushion pin.

Description of the Related Art

A die cushion apparatus is an apparatus that generates pressure in an upward direction on a cushion pin and generates reaction force for wrinkle holding during drawing on a workpiece.

The die cushion apparatus plays a role of pressing down a perimeter of a workpiece by holding the position of a cushion pin at a predetermined position to support the workpiece in a state that the height of a lower surface of an upper die fixed to a press slide in a press machine is higher than the workpiece placed in a lower die and generating a reaction force during a drawing process, on the cushion pin, when the height of the lower surface of the upper die is equal to or lower than the workpiece placed on an upper surface of the lower die.

Generally, the switching from a position control that holds the position of a cushion pin to pressure control that generates reaction force of drawing on the cushion pin uses a method that performs the switching in accordance with the height of the press slide (lower surface of the upper die) (PTL1 and PTL2).

Citation List

PTL1: Japanese Patent Application Laid-Open No. 2009-279620
PTL2: Japanese Patent Application Laid-Open No. 2017-225998

SUMMARY OF THE INVENTION

In a method that switches between position control and pressure control as in PTL1 and PTL2, in a case where the time when the upper die and a workpiece are brought into contact and the time when the control mode over the die cushion apparatus is switched from the position control to the pressure control are not matched, the following problems may occur.

For example, if switching to the pressure control is performed before the upper die is brought into contact with a workpiece, the cushion pin unintentionally keeps rising until it is mechanically restrained, which may possibly damage the workpiece or break the die.

The causes of the mismatch of the switching time include a setting error of the press die height, a thickness error of the upper and lower dies, fluctuations in thickness of workpieces and so on. Even by detecting an abnormal action caused by those erroneous operations and/or improper settings by the controller side according to some method and blocking the position holding force and pressure to be applied to the cushion pin, the abnormal action of the cushion pin may not be completely inhibited due to inertial forces and residual pressure.

The presently disclosed subject matter was made in view of such circumstances, and it is an object of the presently disclosed subject matter to provide a die cushion control apparatus and method and a die cushion apparatus which allow to inhibit an abnormal action of a cushion pin.

In order to achieve the object, the invention according to a first aspect is a die cushion control apparatus for a die cushion apparatus, the die cushion apparatus including: a hydraulic cylinder that supports a cushion load generating member that generates a cushion load; a hydraulic cylinder drive device that includes a drive motor and a hydraulic pump to be driven by the drive motor and that drives the hydraulic cylinder; a cushion target position command device and a cushion target load command device that output a cushion target position command and a cushion target load command, respectively, in accordance with a crank angle of a press machine or a position of a press slide; a position sensor that detects a position of the cushion load generating member; and a pressure sensor that detects a pressure of a lower chamber of the hydraulic cylinder, in which the die cushion control apparatus includes a processor and a controller that controls the drive motor in accordance with an input control command, the processor, assuming that the hydraulic cylinder includes a compression spring model, acquires a deflection length of a compression spring as a target deflection length when an upward load of the cushion load generating member is equal to a set load that is set in advance, generates a cushion load command or a pressure command obtained by converting the cushion load command with a cylinder area based on the cushion target load command, the target deflection length, the cushion target position command, and the cushion position that is a position of the cushion load generating member detected by the position sensor, and generates the control command based on a second deviation between the cushion load command and a cushion load converted from a pressure detected by the pressure sensor or a second deviation between the pressure command and the pressure detected by the pressure sensor.

According to the first aspect of the presently disclosed subject matter, the load characteristic curve of the compression spring when assuming that the hydraulic cylinder is a compression spring is referred, and a cushion load command or a pressure command is generated from the cushion position detected by the position sensor. Then, the control command is generated based on a second deviation between the generated cushion load command and a cushion load converted from a pressure detected by the pressure sensor or a second deviation between the pressure command and a pressure detected by the pressure sensor, and the drive motor is controlled in accordance with the control command. Therefore, even with a setting error for the press die height, control can be performed so as to prevent abnormal pushing-up of the cushion pin.

In a die cushion control apparatus according to a second aspect of the presently disclosed subject matter, the processor in the first aspect preferably calculates the deflection length of the compression spring based on the cushion target position command, the target deflection length, and the cushion position and calculates the cushion load command based on the calculated deflection length and the target deflection length and the cushion target position command by the following equation:

cushion load command = (cushion target load command/target deflection length) $\times$ deflection length.

Thus, if the deflection length is equal to zero, the cushion load command or the pressure command is equal to zero, and the cushion load command or the pressure command increases in proportion to the deflection length, and if the deflection length reaches the target deflection length, the cushion load command or the pressure command becomes a command corresponding to the cushion target load. Therefore, even when no contact with the upper die of the press slide is not achieved, the cushion pin does not rise beyond the position where the deflection length is equal to zero.

In a die cushion control apparatus according to a third aspect of the presently disclosed subject matter, the processor in the first aspect or the second aspect preferably generates a cushion position command based on the cushion target position command and the cushion position, and generates the control command based on a first deviation between the cushion position command and the cushion position.

In a die cushion control apparatus according to a fourth aspect of the presently disclosed subject matter, the processor in the third aspect preferably generates the cushion target position command as the cushion position command if the cushion load command or the pressure command is less than or equal to zero or a predetermined value that is set in advance and generates the cushion position as the cushion position command if the cushion load command or the pressure command is greater than zero or the predetermined value. Thus, when the cushion load command or the pressure command is controlled, the position loop gain ratio is equal to 0%, and control is substantially performed only with the cushion load command or the pressure command.

In a die cushion control apparatus according to a fifth aspect of the presently disclosed subject matter, the processor in the fourth aspect preferably calculates a first supply amount of hydraulic fluid to be fed to an upper chamber or lower chamber of the hydraulic cylinder which is necessary for causing the position of the cushion load generating member to reach a cushion position corresponding to the cushion position command based on the first deviation and calculates a second supply amount of the hydraulic fluid to be fed to the lower chamber of the hydraulic cylinder which is necessary for causing the upward load of the cushion load generating member to reach a cushion load corresponding to the cushion load command based on the second deviation, and calculates a rotation angle of the drive motor based on the first supply amount and the second supply amount and an ejected amount of the hydraulic fluid for one rotation of the hydraulic pump and generates the control command based on the rotation angle.

In a die cushion control apparatus according to a sixth aspect of the presently disclosed subject matter, the processor in any one of the third aspect to the fourth aspect preferably includes a cushion position controller that generates a first speed command based on the first deviation and a cushion position controller or a pressure controller that generates a second speed command based on the second deviation, and the processor generates the control command by adding the first speed command and the second speed command.

According to the fifth aspect or the sixth aspect of the presently disclosed subject matter, the switching between the cushion load control (or pressure control) and the cushion position control within the control apparatus is not applied, and the cushion load control (or pressure control) and the cushion position control are operated at all times and the load characteristic curve of the compression spring from the information on the cushion position is referred so that the cushion load control (pressure control) and the cushion position control can be performed.

In a die cushion control apparatus according to a seventh aspect of the presently disclosed subject matter, the processor in the sixth aspect preferably generates a cushion unloaded-position command obtained by adding the cushion target position command and the target deflection length, generates a third speed command based on the cushion unloaded-position command, and generates the control command by adding the first speed command, the second speed command, and the third speed command. This control with the third speed command is feed-forward control so that highly responsive control can be performed.

In a die cushion control apparatus according to an eighth aspect of the presently disclosed subject matter, the processor in the seventh aspect preferably acquires a displacement of the hydraulic cylinder per unit time by performing time-differentiation on the cushion unloaded-position command and converts the displacement per unit time to the speed of the drive motor to generate the third speed command.

In a die cushion control apparatus according to a ninth aspect of the presently disclosed subject matter, the processor in the seventh aspect or the eighth aspect preferably includes a delay unit that delays the cushion position command to be used for calculating the first deviation and the cushion load command or the pressure command to be used for calculating the second deviation.

In a die cushion control apparatus according to a tenth aspect of the presently disclosed subject matter, the processor in any one of the first aspect to the ninth aspect preferably calculates the target deflection length based on hydraulic circuit parameters including flow path volume information on a hydraulic circuit including the hydraulic cylinder, a bulk modulus of the hydraulic fluid and a cylinder diameter of the hydraulic cylinder and the set load.

In a die cushion control apparatus according to an eleventh aspect of the presently disclosed subject matter, the processor in any one of the first aspect to the ninth aspect preferably calculates the target deflection length based on a spring coefficient of the compression spring and the set load.

The invention according to a twelfth aspect is a die cushion apparatus including the die cushion control apparatus according to any one of the first aspect to the eleventh aspect.

The invention according to a thirteenth aspect is a die cushion control method for a die cushion control apparatus for a die cushion apparatus, the die cushion apparatus including a hydraulic cylinder that supports a cushion load generating member that generates a cushion load, a hydraulic cylinder drive device that includes a drive motor and a hydraulic pump to be driven by the drive motor and that drives the hydraulic cylinder, a cushion target position command device and a cushion target load command device that output a cushion target position command and a cushion target load command, respectively, in accordance with a crank angle of a press machine or a position of a press slide, a position sensor that detects a position of the cushion load generating member as a cushion position and a pressure sensor that detects a pressure of a lower chamber of the hydraulic cylinder, in which a processor performs the steps of, assuming that the hydraulic cylinder includes a compression spring model, acquiring a deflection length of a compression spring as a target deflection length when an upward load of the cushion load generating member is equal to a set load that is set in advance, generating a cushion load command or a pressure command obtained by converting the cushion load command with a cylinder area based on the cushion target load command, the target deflection length, the cushion target position command, and the cushion position, generating a control command based on a second deviation between the cushion load command and a cushion load converted from a pressure detected by the pressure sensor or a second deviation between the pressure command and the pressure detected by the pressure sensor, and outputting the generated control command to a speed controller that controls the drive motor.

In a die cushion control method according to a fourteenth aspect of the presently disclosed subject matter, the processor according to the thirteenth aspect preferably calculates the deflection length of the compression spring based on the cushion target position command, the target deflection length, and the cushion position and calculates the cushion load command based on the calculated deflection length and the target deflection length and the cushion target position command by the following equation:

cushion load command = (cushion target load command/target deflection length) × deflection length.

A die cushion control method according to a fifteenth aspect of the presently disclosed subject matter preferably includes, in the thirteenth aspect or the fourteenth aspect, the steps of, by the processor, generating a cushion position command based on the cushion target position command and the cushion position, and by the processor, generating the control command based on a first deviation between the cushion position command and the cushion position.

In a die cushion control method according to a sixteenth aspect of the presently disclosed subject matter, the processor in the fifteenth aspect preferably generates the cushion target position command as the cushion position command if the cushion load command or the pressure command is less than or equal to zero or a predetermined value that is set in advance and generates the cushion position as the cushion position command if the cushion load command or the pressure command is greater than zero or the predetermined value.

In a die cushion control method according to a seventeenth aspect of the presently disclosed subject matter preferably includes, in the sixteenth aspect, the steps of, by the processor, calculating a first supply amount of hydraulic fluid to be fed to an upper chamber or lower chamber of the hydraulic cylinder which is necessary for causing the position of the cushion load generating member to reach a cushion position corresponding to the cushion position command based on the first deviation and calculating a second supply amount of the hydraulic fluid to be fed to the lower chamber of the hydraulic cylinder which is necessary for causing the upward load of the cushion load generating member to reach a cushion load corresponding to the cushion load command based on the second deviation, and, by the processor, calculating a rotation angle of the drive motor based on the first supply amount and the second supply amount and an ejected amount of the hydraulic fluid for one rotation of the hydraulic pump and generates the control command based on the rotation angle.

In a die cushion control method according to an eighteenth aspect of the presently disclosed subject matter, the processor in any one of the fifteenth aspect to the seventeenth aspect preferably performs the steps of generating a first speed command based on the first deviation, generating a second speed command based on the second deviation, and generating the control command by adding the first speed command and the second speed command.

In a die cushion control method according to a nineteenth aspect of the presently disclosed subject matter, the processor in the eighteenth aspect preferably performs the steps of generating a cushion unloaded-position command obtained by adding the cushion target position command and the target deflection length, generating a third speed command based on the cushion unloaded-position command, and generating the control command by adding the first speed command, the second speed command, and the third speed command.

In a die cushion control method according to a twentieth aspect of the presently disclosed subject matter, the processor in the nineteenth aspect preferably calculates a displacement of the hydraulic cylinder per unit time by performing time-differentiation on the cushion unloaded-position command and converts the calculated displacement to the speed of the drive motor to generate the third speed command.

According to the presently disclosed subject matter, even when cushion load control is started before the upper die and a workpiece are brought into contact due to a setting error for a press die height, the cushion pin does not rise beyond the cushion standby position that is set in advance, thus allowing prevention of damages on the workpiece or die due to the pushing-up of the cushion pin.

## BRIEF DESCRIPTION OF THE DRAWINGS

Fig. 1 is a configuration diagram illustrating a press machine including a die cushion apparatus according to the presently disclosed subject matter;

Fig. 2 is a graph illustrating a load characteristic of a compression spring model representing a relationship between a deflection length of a compression spring when it is assumed that a hydraulic cylinder is a compression spring and an upward load of a cushion pin;

Fig. 3 is a schematic diagram illustrating each operation state of a die cushion apparatus body and so on controlled by a die cushion control apparatus according to the presently disclosed subject matter;

Fig. 4 is a functional block diagram illustrating an embodiment of the compression spring model of the processor illustrated in Fig. 1;

Fig. 5 is a block diagram illustrating a main part of the die cushion apparatus illustrated in Fig. 1;

Fig. 6 is a diagram illustrating an example of a method for generating a speed command for controlling a cushion position by the die cushion control apparatus;

Fig. 7 is a diagram illustrating an example of a method for generating a speed command for controlling a cushion load by the die cushion control apparatus;

Fig. 8 is a diagram illustrating an example of a method for generating a speed command for controlling a cushion position and a cushion load by the die cushion control apparatus;

Fig. 9 is a diagram illustrating another example of a method for generating a speed command for controlling a cushion position and a cushion load by the die cushion control apparatus;

Fig. 10 is a graph illustrating a press slide position, a cushion position, a cushion load, and a cushion unloaded position, which is a graph illustrating an effect of the die cushion control apparatus according to the presently disclosed subject matter;

Fig. 11 is a schematic diagram illustrating a state that the press slide is above the cushion pin and is separated from the cushion pin;

Fig. 12 is a schematic diagram illustrating a state that the press slide is in contact with the cushion pin and the cushion pin is slightly pressed down;

Fig. 13 is a schematic diagram illustrating a state that the press slide further falls from the state illustrated in Fig. 12 and the cushion load reaches a set load;

Fig. 14 is a schematic diagram illustrating a state that the press slide further falls from the state illustrated in Fig. 13 and holds the set load during the fall (during press working);

Fig. 15 is a graph illustrating an operation of each component in a case where a normal press-working operation is performed with a conventional die cushion control apparatus;

Fig. 16 is a graph illustrating an operation of each component in a case where an abnormal operation occurs with a conventional die cushion control apparatus;

Fig. 17 is a graph illustrating an operation of each component in a case where a die cushion apparatus body is controlled by the die cushion control apparatus according to the presently disclosed subject matter; and

Fig. 18 is a flowchart illustrating an embodiment of a die cushion control method according to the presently disclosed subject matter.

DETAILED DESCRIPTION OF THE EMBODIMENTS

Embodiments of a die cushion control apparatus and method and a die cushion apparatus according to the presently disclosed subject matter are described in detail below with reference to the attached drawings.

[Press Machine Including Die Cushion Apparatus]

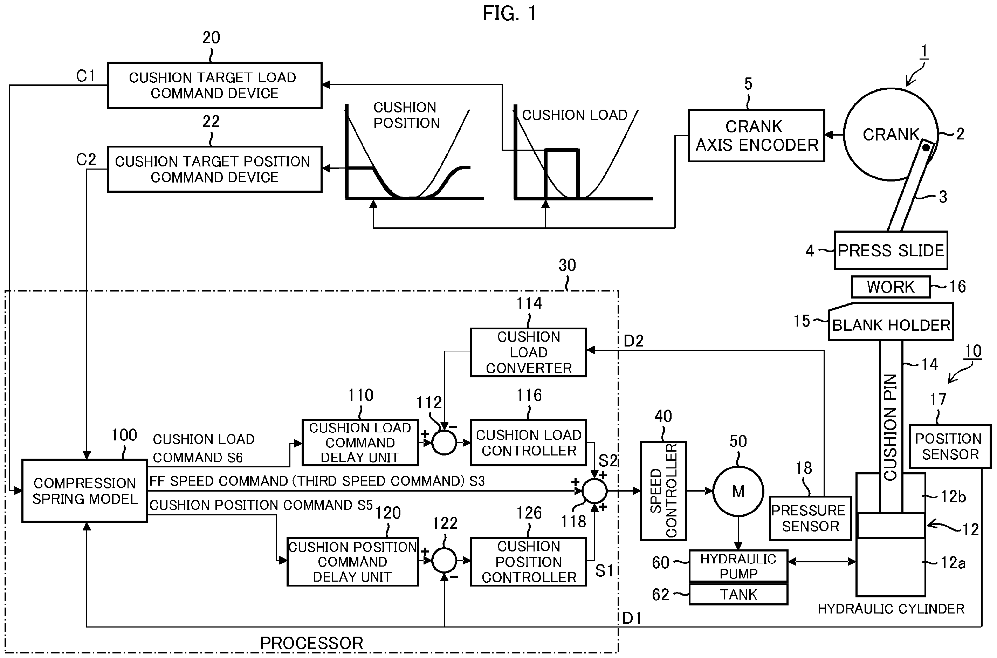

Fig. 1 is a configuration diagram illustrating a press machine including a die cushion apparatus according to the presently disclosed subject matter.

The press machine 1 illustrated in Fig. 1 is a crank press having a crank mechanism including a crank axis 2 and a connecting rod 3, where the crank axis 2 is rotated by a servo motor, not illustrated, and the rotation drive force of the crank axis 2 is transmitted to the press slide 4 through the connecting rod 3 so that the press slide 4 is reciprocated in a top-bottom direction.

The crank axis 2 is provided with a crank axis encoder 5 for detecting a crank angle of the crank axis 2. A crank angle signal indicative of a crank angle detected by the crank axis encoder 5 is output to a cushion target load command device 20 and a cushion target position command device 22.

An upper die, not illustrated, is attached to the press slide 4 while a lower die is attached to a bolster.

A blank holder 15 is placed between the upper die and the lower die, and a lower side of the blank holder 15 is supported by the cushion pin 14 while a work (workpiece) 16 is set (in contact with) on an upper side thereof.

The press machine 1 causes the press slide 4 to fall so that the work 16 can undergo press-working (drawing in this example) between the upper die and the lower die. It should be noted that while the press machine 1 in this example is a crank press, a press machine to which the die cushion apparatus according to the presently disclosed subject matter is applied is not limited to such a crank press, and the presently disclosed subject matter is applicable to a variety of press machines.

The die cushion apparatus applies pressing force (cushion load) to a circumference edge of the work 16 to undergo drawing from the lower side and plays a role of holding the circumferential edge of the work 16 between the upper die and the blank holder 15.

The die cushion apparatus includes a die cushion apparatus body 10 and a die cushion control apparatus according to the presently disclosed subject matter.

The die cushion apparatus body 10 includes a cushion load generating member that includes a cushion pin 14 and a blank holder 15 and that generates a cushion load, a hydraulic cylinder ("oil-hydraulic cylinder" in this example) 12 that supports the cushion load generating member, a hydraulic cylinder drive device (oil-hydraulic cylinder drive device) that includes a drive motor 50 and a hydraulic pump (oil-hydraulic pump) 60 to be driven by the drive motor 50 and that drives the hydraulic cylinder 12, a cushion target load command device 20 and a cushion target position command device 22 that output a cushion target load command C1 and a cushion target position command C2, respectively, based on a crank angle signal indicative of a crank angle detected by the crank axis encoder 5 or a slide position signal indicative of the position of the press slide 4 converted from the crank angle, a position sensor 17 that detects a position of a cushion load generating member (the tip position of the cushion pin 14 in this example), and a pressure sensor 18 that detects a pressure of the lower chamber 12a of the hydraulic cylinder 12.

It should be noted that, although the piston rod of the hydraulic cylinder 12 is a cushion pin in this example for simplicity of description, the cushion load generating member includes a blank holder 15, cushion pins that hold the blank holder, and a cushion pad (not illustrated) that supports the cushion pins and the piston rod of the hydraulic cylinder 12 is connected to the cushion pad, and the hydraulic cylinder 12 typically supports the cushion pad to support the blank holder 15 through the cushion pins.

The drive shaft of the drive motor 50 is connected to the axis of rotation of the hydraulic pump 60 directly or via a reducer, and the hydraulic pump 60 driven by the drive motor 50 supplies a hydraulic fluid (hydraulic oil) necessary for causing the position of the cushion pin 14 (cushion position) to reach a cushion target position to the lower chamber 12a or the upper chamber 12b of the hydraulic cylinder 12 and supplies pressure fluid (pressure oil) necessary for causing the upward load of the cushion pin 14 to be a cushion load corresponding to a cushion load command to the lower chamber 12a of the hydraulic cylinder 12.

It should be noted that a tank 62 retains excess hydraulic oil discharged from the hydraulic pump 60 during a cushion position control and a cushion load control or supplies hydraulic oil in need to the hydraulic pump 60.

The die cushion control apparatus according to the presently disclosed subject matter includes a processor 30 and a controller (speed controller) 40.

The processor 30 includes a central processing unit (CPU) and receives input of a cushion target load command C1 and a cushion target position command C2 from the cushion target load command device 20 and the cushion target position command device 22, respectively and further receives input of a cushion position signal D1 indicative of a tip position of the cushion pin 14 and a pressure signal D2 indicative of a pressure of the lower chamber 12a in the hydraulic cylinder 12 from the position sensor 17 and the pressure sensor 18, respectively and generates a control command (speed command) to be output to the speed controller 40 based on the cushion target load command C1, the cushion target position command C2, the cushion position signal D1, and the pressure signal D2.

The processor 30 functions as a compression spring model 100, a cushion load command delay unit 110, a cushion load converter 114, a cushion load controller 116, a cushion position command delay unit 120, a cushion position controller 126, and adders 112, 122, and 118. It should be noted that details of processing by each of the components of the processor 30 are described below.

[Load Characteristic of Compression Spring Model]

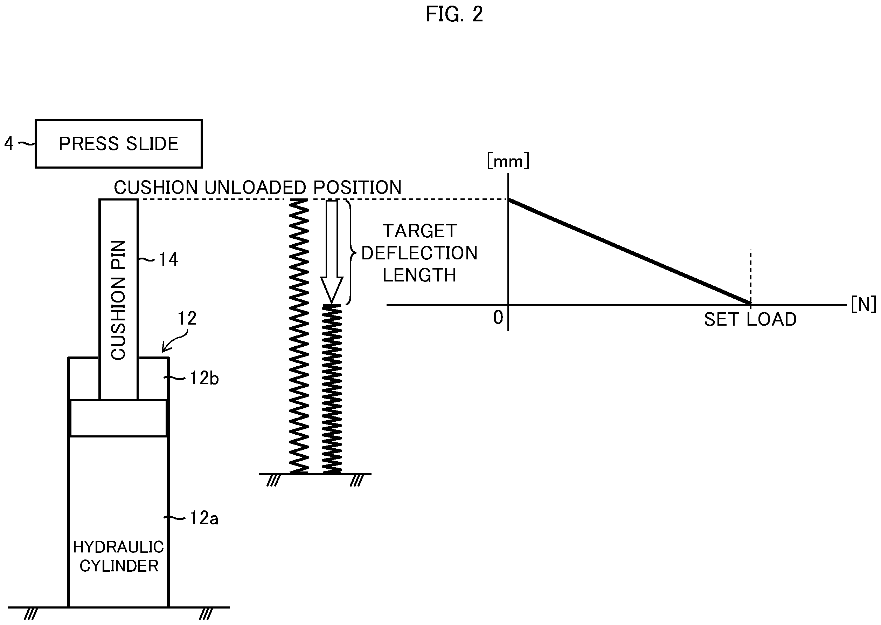

Fig. 2 is a graph illustrating a load characteristic of a compression spring model representing a relationship between a deflection length of a compression spring when it is assumed that a hydraulic cylinder is a compression spring and an upward load of a cushion pin.

As illustrated in Fig. 2, the press slide 4 is located above the tip of the cushion pin 14 and the tip position of the cushion pin is assumed as a cushion unloaded position separated from the tip of the cushion pin 14.

Here, it is assumed that the hydraulic circuit including the hydraulic cylinder 12 is a hydraulic circuit model which is filled with hydraulic oil and in which the hydraulic pump 60 stays still and the cushion load is equal to 0 [kN].

No cushion load is applied to the compression spring at the cushion unloaded position, the compression spring has a free length, and the deflection length is equal to zero.

When fall of the press slide 4 brings the press slide 4 into contact with the cushion pin 14, the cushion pin 14 then falls along with the press slide 4. It should be noted that, although the upper die, the work 16 and the blank holder 15 are interposed between the press slide 4 and the cushion pin 14 in reality, it is omitted in this example.

When the cushion pin 14 is pressed down (when the compression spring is deflected, an upward load occurs in the cushion pin 14 as a reaction force in proportion to the press length (deflection length) (see the graph in Fig. 2). Then, the deflection length of the compression spring when an upward load of the cushion pin 14 is equal to a set load that is set in advance is handled as a "target deflection length".

[Outline of Die Cushion Control]

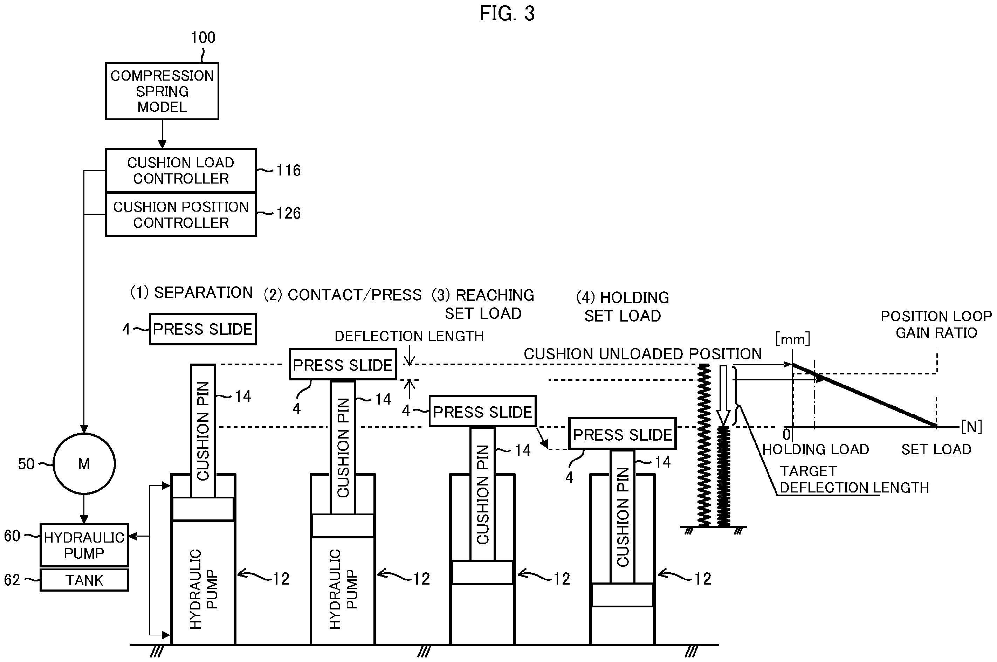

Fig. 3 is a schematic diagram illustrating each operation state of a die cushion apparatus body and so on controlled by a die cushion control apparatus according to the presently disclosed subject matter.

(1) Separation

In a state that the press slide 4 is located in an upper part and is deviated from the cushion pin 14, position control is performed such that the cushion load command to the cushion load controller 116 is equal to zero, the position loop gain ratio to the cushion position controller 126 is equal to 100%, and the tip position (cushion position) of the cushion pin 14 is held at the cushion unloaded position.

(2) Contact/Press

When the press slide 4 falls, the press slide 4 is brought into contact with the cushion pin 14 and presses the cushion pin 14 down, the cushion load command to the cushion load controller 116 is a load command depending on the compression spring characteristic, the position loop gain ratio to the cushion position controller 126 is equal to 0%, and the upward load (cushion load) of the cushion pin 14 is controlled with the cushion load command depending on the compression spring characteristic.

(3) Reaching Set Load

When the press slide 4 further falls to the target deflection length, the cushion load command to the cushion load controller 116 is the cushion target load command corresponding to the set load that is set in advance and the cushion position controller 126 does not cause a reaction force corresponding to a press position. In other words, the cushion pin 14 is controlled so as to push up the press slide 4 with the set load.

(4) Holding Set Load

When the press slide 4 further falls, a fall command with reference to the target deflection length is performed on the cushion position controller 126. The cushion position controller 126 outputs a motor rotational speed that is an oil discharge amount of the hydraulic cylinder 12 corresponding to the fall command so that the cushion pin 14 continues its falling action while pushing up the press slide 4 with the set load.

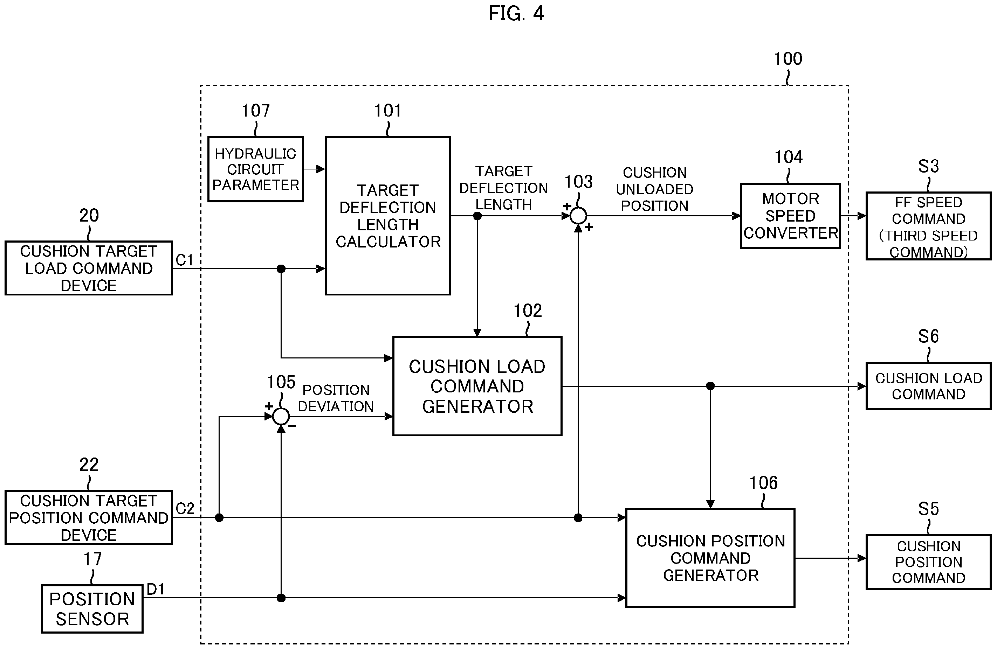

Fig. 4 is a functional block diagram illustrating an embodiment of the compression spring model of the processor illustrated in Fig. 1.

The compression spring model 100 illustrated in Fig. 4 includes a target deflection length calculator 101, a cushion load command generator 102, a motor speed converter 104, a cushion position command generator 106, and adders 103 and 105.

The compression spring model 100 receives input of a cushion target load command C1 and a cushion target position command C2 from the cushion target load command device 20 and the cushion target position command device 22, respectively and further receives input of a cushion position signal D1 from the position sensor 17 and generates a third speed command S3 that is a feed-forward speed command (FF speed command), a cushion position command S5, and a cushion load command S6 based on the cushion target load command C1, the cushion target position command C2, the cushion position signal D1, as described later.

The target deflection length calculator 101 receives input of information indicating a cushion target load (set load that is set in advance by a user) C1 set in the cushion target load command device 20 and a hydraulic circuit parameter (hydraulic circuit parameter) 107 and calculates a target deflection length based on the input information. The cushion target load may be acquired from an input unit through which a user inputs a set load, without limiting to acquisition from the cushion target load command device 20.

The hydraulic circuit parameters are parameters including a flow path volume information on the hydraulic circuit (hydraulic circuit) including the hydraulic cylinder 12, a bulk modulus of hydraulic fluid (hydraulic oil), and a cylinder diameter of the hydraulic cylinder 12 and ca be stored in a storage unit. It should be noted that the information on the flow path volume of the hydraulic circuit parameters may include information on a flow path volume depending on a hydraulic rubber hose length and a hydraulic rubber hose diameter between the hydraulic cylinder 12 and the hydraulic pump 60, and the modulus of the hydraulic rubber hose can also be included in the hydraulic circuit parameters.

The target deflection length calculator 101 creates a cushion hydraulic circuit model based on the hydraulic circuit parameters 107 where the hydraulic circuit including the hydraulic cylinder 12 and a hydraulic rubber hose is filled with hydraulic oil and the hydraulic pump 60 stays still and the cushion load is equal to 0[kN].

The target deflection length calculator 101 applies the created cushion hydraulic circuit model and uses the hydraulic circuit parameters 107 to calculate a displacement of the hydraulic cylinder 12 necessary for giving the cushion target load command C1, and outputs the displacement as a target deflection length.

It should be noted that the target deflection length calculator 101 may calculate the target deflection length based on the compression spring characteristic (spring constant) of the hydraulic cylinder 12 and the cushion target load (set load). In this case, the spring constant of the hydraulic cylinder 12 can be calculated by applying a known load to the hydraulic cylinder 12 and from a displacement of the hydraulic cylinder resulting from the application of the known load.

The target deflection length output from the target deflection length calculator 101 and the cushion target position command C2 output from the cushion target position command device 22 are added by the adder 103, and the value resulting from the addition is output to the motor speed converter 104 as a cushion unloaded-position command.

The motor speed converter 104 acquires a displacement of the hydraulic cylinder 12 per unit time by performing time-differentiation on the input cushion unloaded-position command and converts the displacement per unit time to the rotational speed of the drive motor 50 to generate an FF speed command (third speed command) S3.

The motor speed converter 104 acquires an oil amount per unit time to be supplied to from the hydraulic pump 60 to the hydraulic cylinder 12 from the displacement per unit time and the cylinder area and divides the acquired oil amount by a volume (ejected amount) of oil pushed aside by one rotation of the hydraulic pump 60 to generate the rotation angle of the hydraulic pump 60 per unit time, that is, a third speed command indicative of the rotation angle per unit time of the drive motor 50 linking to the drive shaft of the hydraulic pump 60.

The cushion load command generator 102 receives input of the cushion target load command C1 output from the cushion target load command device 20, information indicating a target deflection length output from the target deflection length calculator 101, and a position deviation between the cushion target position command C2 and the cushion position signal D1 output from the adder 105, calculates a deflection length of a compression spring when assuming the hydraulic cylinder 12 is a compression spring, and, based on the calculated deflection length, the cushion target load command C1, and the target deflection length, calculates a cushion load command S6 by the following equation:

cushion load command S6 = (cushion target load command/target deflection length) × deflection length.     [Math. 1]

Here, the adder 105 subtracts the cushion position signal D1 indicative of the tip position of the cushion pin 14 detected by the position sensor 17 from the cushion target position command C2 output from the cushion target position command device 22 and outputs information indicating a position deviation that is the subtraction result to the cushion load command generator 102.

The cushion load command generator 102 adds the target deflection length and the position deviation to calculate a deflection length. The deflection length is equal to the target deflection length when the position deviation is equal to 0[mm], and decreases as the position deviation increases in the negative direction, and is equal to 0[mm] when the magnitude of the position deviation in the negative direction is equal to the target deflection length. It should be noted that the deflection length may be acquired by adding the target deflection length and the cushion target position and subtracting the cushion position indicated by the cushion position signal D1 from the added value (corresponding to the cushion unloaded position), without limiting to the acquisition by adding the target deflection length and the position deviation.

The equation [Math. 1] above is an equation under Hooke's law, and (cushion target load command/target deflection length) represents a spring constant k (kN/mm). The cushion load command generator 102 generates a cushion load command S6 by multiplying the spring constant k and the deflection length (mm) in accordance with the equation [Math. 1].

Therefore, the cushion load command generator 102 outputs the cushion load command S6 being the cushion target load command C1 (command indicating the set load) when the deflection length reaches the target deflection length, outputs the cushion load command S6 that decreases in proportion to the deflection length as the deflection length decreases, and outputs the cushion load command S6 indicating 0[kN] when the deflection length is equal to 0[mm].

The cushion position command generator 106 is applied the cushion target position command C2, the cushion position signal D1, and the cushion load command S6, and when the cushion load command S6 is zero, outputs the cushion target position command C2 as a cushion position command S5 and, when the cushion load command S6 exceeds zero, outputs the cushion position signal D1 as the cushion load command S6. It should be noted that the switching between the cushion target position command C2 and the cushion position signal D1 is not limited to being based on whether the cushion load command S6 is equal to or less than zero or not but may be performed based on whether it is equal to or less than a predetermined values that is set (for example, the cushion load command S6 corresponding to the holding loads of the cushion pin 14, the blank holder 15 and so on supported by the hydraulic cylinder 12 under no load).

Referring back to Fig. 2, the third speed command S3 being a feed forward speed command generated by the compression spring model 100 is output to the adder 118, and the cushion load command S6 and cushion position command S5 generated in the compression spring model 100 are output to the cushion load command delay unit 110 and the cushion position command delay unit 120, respectively.

The cushion load command delay unit 110 and the cushion position command delay unit 120 delay the cushion load command S6 and the cushion position command S5, respectively and then output them to the positive inputs of the adders 112 and 122.

The negative input of the adder 122 is applied the cushion position signal D1 from the position sensor 17, and the adder 122 calculates a deviation (first deviation) between the delayed cushion position command S5 and the cushion position signal D1 and outputs the calculated first deviation to the cushion position controller 126.

Also, the negative input of the adder 112 is applied a signal indicative of an upward load of the cushion pin 14 from the cushion load converter 114, and the adder 112 calculates a deviation (second deviation) between the delayed cushion load command S6 and the signal indicative of cushion load and outputs the calculated second deviation to the cushion load controller 116.

It should be noted that the cushion load converter 114 receives input of a pressure signal D2 indicative of a pressure of the lower chamber 12a of the hydraulic cylinder 12 from the pressure sensor 18, calculates an upward load applied from the hydraulic cylinder 12 to the cushion pin 14 applied based on the pressure of the lower chamber 12a of the hydraulic cylinder 12 and the cross-sectional area of the lower chamber 12a of the hydraulic cylinder 12, and outputs a signal indicative of the calculated load (cushion load) to the negative input of the adder 112.

The cushion position controller 126 generates a first speed command S1 that is a part of the control command based on a first deviation that is input thereto, outputs the first speed command S1 to the adder 118 while the cushion load controller 116 generates a second speed command S2 that is a part of the control command based on a second deviation that is input thereto and outputs the second speed command S2 to the adder 118.

The adder 118 adds the first speed command S 1, the second speed command, and the third speed command S3 and outputs the added speed command to the speed controller 40.

The speed controller 40 outputs a drive signal to the drive motor 50 such that the rotational speed of the drive motor 50 is equal to the target speed indicated by the input speed command and may be configured by a proportional-integral-differential (PID) controller, for example.

The drive shaft of the drive motor 50 and the drive shaft of the hydraulic pump 60 are connected directly or through a reducer, and the hydraulic pump 60 supplies an amount of oil depending on the rotational speed of the drive motor 50 to the hydraulic cylinder 12 or is rotated with pressure oil ejected from the hydraulic cylinder 12. It should be noted that, in a case where the hydraulic pump 60 is rotated with the pressure oil ejected from the hydraulic cylinder 12, the hydraulic pump 60 functions as a hydraulic motor.

It should be noted that, although the compression spring model 100 according to the aforementioned embodiment outputs the cushion load command S6, a pressure command obtained by converting the cushion load command S6 with the cylinder area may be output instead of the cushion load command S6. In other words, the cushion load indicated by the cushion load command S6 is divided by a cross-sectional area of the lower chamber 12a of the hydraulic cylinder 12 to convert it to a pressure, and the pressure designation indicating the pressure may be output. In this case, the cushion load converter 114 that converts the pressure signal D2 to a cushion load signal is no longer needed. Also, the cushion load command delay unit 110 is now a delay unit that delays a pressure command, and the cushion load controller 116 is now a pressure controller.

Although feed-forward control with the third speed command S3 controls such that a cushion position is equal to the cushion unloaded position, since the cushion position and cushion load involved in the operations of the press slide 4 during the control have errors from a theoretical value, feedback control with the first speed command S1 and the second speed command S2 is performed in order to correct each of the position error and the load error.

The die cushion control apparatus of the embodiment illustrated in Fig. 1 eliminates the switching between the position control and the load control and is characterized by operating the position control and the load control at all times, referring to the load characteristic curve of the compression spring from the cushion position signal D1 indicative of the tip position of the cushion pin 14 detected by the position sensor 17 and outputting a cushion position command S5 and a cushion load command S6 for the cushion position control and the cushion load control.

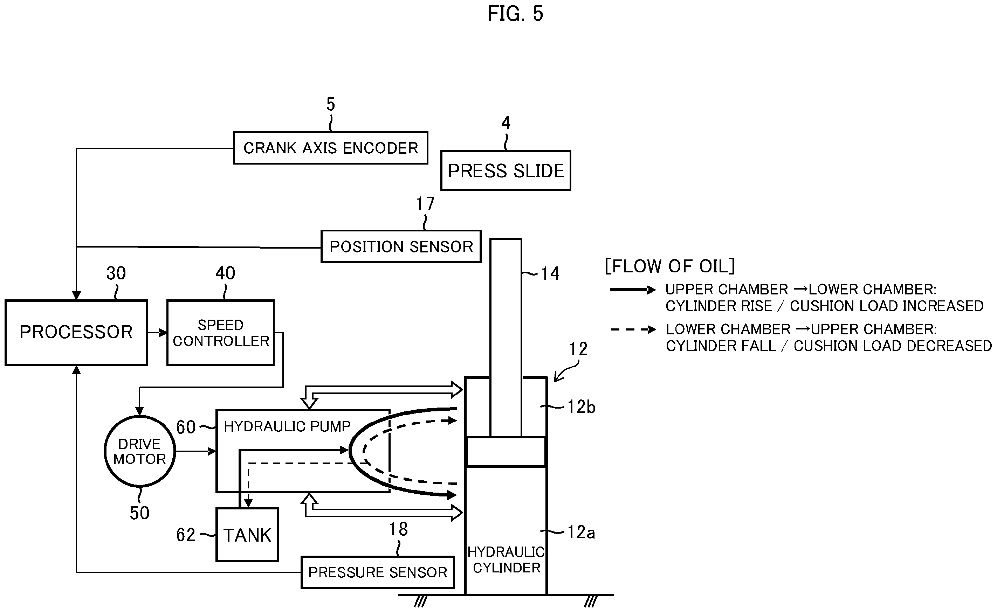

Fig. 5 is a block diagram illustrating a main part of the die cushion apparatus illustrated in Fig. 1.

Referring to Fig. 5, the drive motor 50 is controlled by the die cushion control apparatus including the processor 30 and the speed controller 40 illustrated in Fig. 1, and the hydraulic cylinder 12 is controlled by the hydraulic pump 60 having its drive shaft connected to the drive motor 50.

When a rotation drive force is transmitted from the drive motor 50 to the hydraulic pump 60 and the hydraulic oil flows from the upper chamber 12b to the lower chamber 12a in the hydraulic cylinder 12 with the hydraulic pump 60 (when the hydraulic oil flows in the direction indicated by the solid-line arrow), the cushion pin 14 moves in the rising direction, and when the rise of the cushion pin 14 is restricted by the press slide 4, the upward load (cushion load) on the cushion pin 14 increases.

Also, when the hydraulic oil flows from the lower chamber 12a to the upper chamber 12b in the hydraulic cylinder 12 with the hydraulic pump 60 (when the hydraulic oil flows in the direction indicated by the broken-line arrow), the cushion pin 14 moves in the descending direction, and the cushion load also decreases. It should be noted that the excess or deficient hydraulic oil due to a difference in cross-sectional area between the lower chamber 12a and the upper chamber 12b in the hydraulic cylinder 12 is supplied from the tank 62 or is drained from the tank 62.

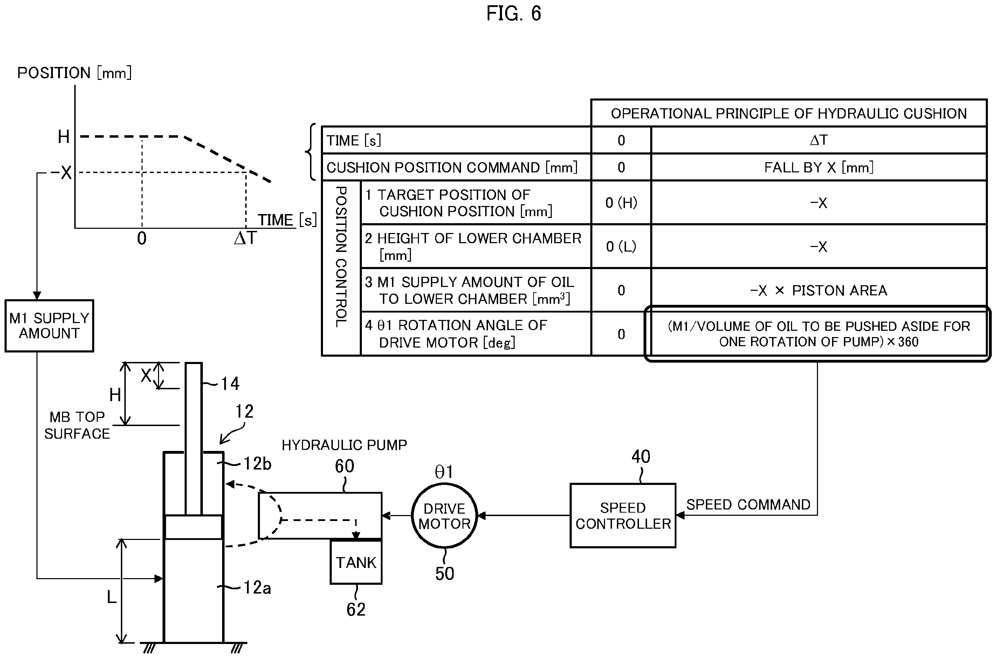

Each of Figs. 6 to 9 is a diagram illustrating a state of generation of a speed command and control of the die cushion apparatus body.

[Cushion Position Control]

Fig. 6 is a diagram illustrating an example of a method for generating a speed command for controlling a cushion position by the die cushion control apparatus.

As illustrated in Fig. 6, a time 0[s] is set as a reference, and it is assumed that the tip position of the cushion pin 14 at the time 0[s] is located at a height of H[mm] from the moving bolster (MB) top surface, the target position of the cushion position is 0[mm] (the height H in Fig. 6), and the cushion position command is 0[mm]. It is also assumed that the height of the lower chamber 12a of the hydraulic cylinder 12 is equal to 0[mm] (L[mm] in Fig. 6).

Thereafter, if, at a time $\Delta T$, the cushion position is lowered by X[mm] from the reference, the cushion position command (first deviation) relative to the cushion position at the reference is -X[mm] (that is, the target height of the lower chamber 12a of the hydraulic cylinder 12 is equal to -X[mm]), and the amount of oil M1 (first supply amount) to be supplied to the lower chamber 12a of the hydraulic cylinder 12 can be expressed as in the following equation:

[Math. 2]

$$M1 = -X \times \text{piston area (lower chamber)} \ [\text{mm}^3].$$

In this case, since the amount of oil M1 is negative, the amount of oil M1 is drained from the lower chamber 12a of the hydraulic cylinder 12.

Assuming that the rotation angle of the drive motor 50 for ejecting the amount of oil M1 from the lower chamber 12a of the hydraulic cylinder 12 is θ1, the rotation angle θ1 can be expressed by the following equation:

θ1 = (M1/volume of oil to be pushed aside for one rotation of the hydraulic pump 60) × 360,  [Math. 3]

and the angular speed ω1 is expressed as ω1 = θ1/ΔT. The cushion position controller 126 illustrated in Fig. 1 outputs a speed command indicating the angular speed ω1 as the first speed command S 1.

The rotational speed of the drive motor 50 (rotational speed of the hydraulic pump 60 having its drive shaft linked to the drive motor 50) is controlled through the speed controller 40 based on the thus calculated speed command so that the tip position (cushion position) of the cushion pin 14 can be lowered by X [mm].

[Cushion Load Control]

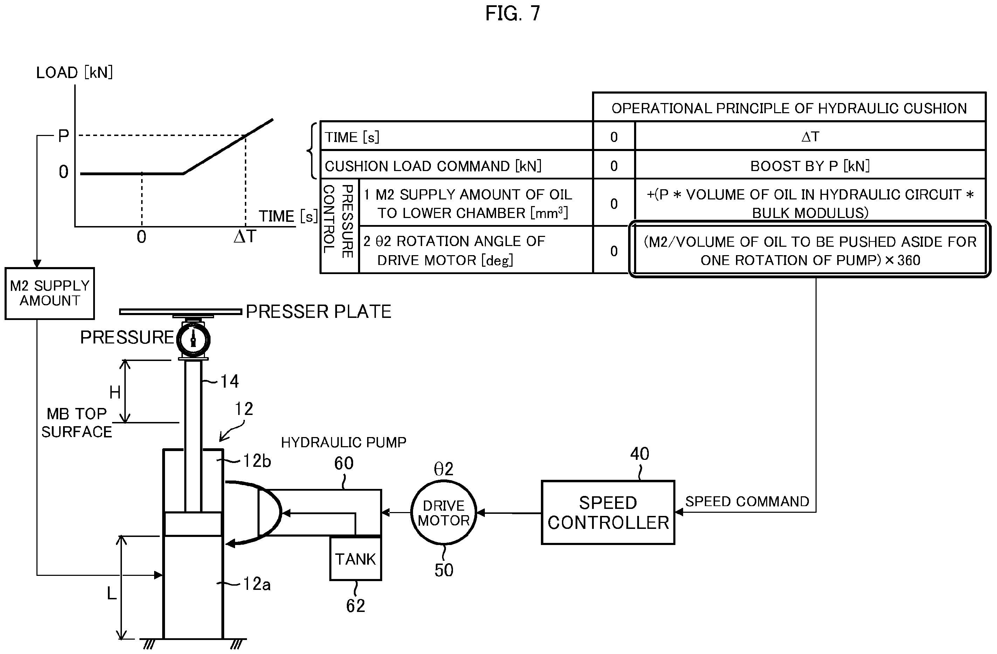

Fig. 7 is a diagram illustrating an example of a method for generating a speed command for controlling a cushion load by the die cushion control apparatus.

As illustrated in Fig. 7, a time 0[s] is set as a reference, and it is assumed that the upward load (cushion load) of the cushion pin 14 at the time 0[s] is 0 [kN].

Thereafter, if, at a time ΔT, the cushion load is raised by P[kN] from the reference, the cushion load command (second deviation) relative to the cushion position at the reference is P [kN] and the amount of oil M2 (second supply amount) to be supplied to the lower chamber 12a of the hydraulic cylinder 12 can be acquired by the following equation:

[Math. 4]

$$M2 = P \times \text{(volume of oil in the hydraulic circuit)} / \text{bulk modulus}.$$

By supplying hydraulic oil to the lower chamber 12a of the hydraulic cylinder 12 by the amount of oil M2, the upward load (cushion load) of the cushion pin 14 can be raised by P[kN].

Assuming that the rotation angle of the drive motor 50 for supplying the amount of oil M2 to the lower chamber 12a of the hydraulic cylinder 12 is θ2, the rotation angle θ2 can be expressed by the following equation:

θ2 = (M2/volume of oil to be pushed aside for one rotation of the hydraulic pump 60) × 360,  [Math. 5]

and the angular speed ω2 is expressed as ω2 = θ2/ΔT. The cushion load controller 116 illustrated in Fig. 1 outputs a speed command indicating the angular speed ω2 as the second speed command S2.

The rotational speed of the drive motor 50 is controlled through the speed controller 40 based on the thus calculated speed command so that the upward load (cushion load) of the cushion pin 14 can be raised by P[kN].

[Cushion Position Control + Cushion Load Control]

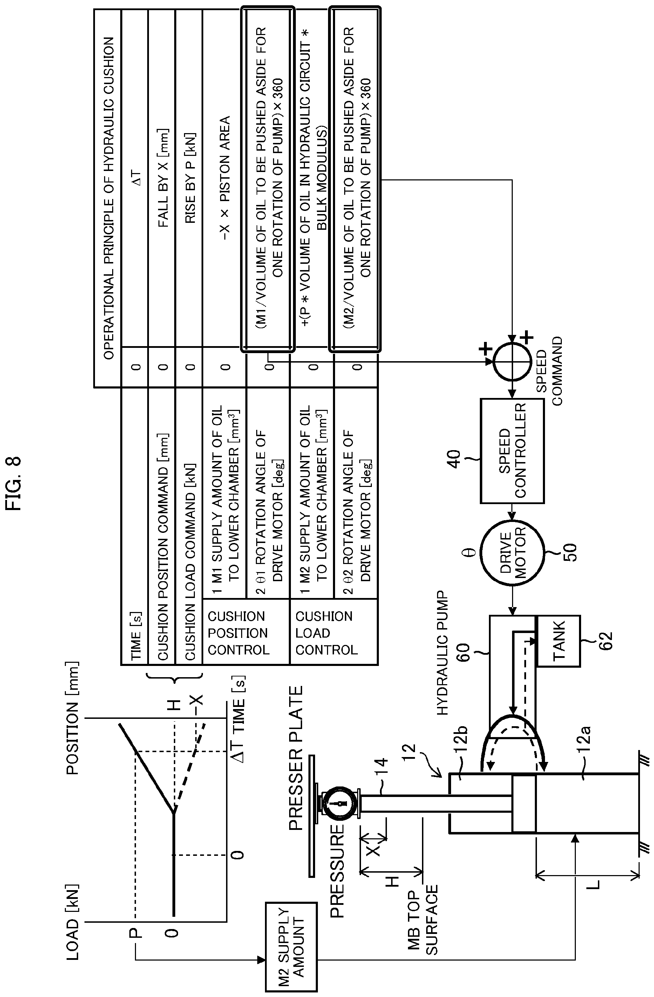

Fig. 8 is a diagram illustrating an example of a method for generating a speed command for controlling a cushion position and a cushion load by the die cushion control apparatus.

As illustrated in Fig. 8, a time 0[s] is set as a reference, and it is assumed that the tip position (cushion position) of the cushion pin 14 at the time 0[s] is located at a height of H[mm] from the moving bolster (MB) top surface, the upward load (cushion load) of the cushion pin 14 is 0 [kN].

Then, at the time ΔT, when the cushion position is lowered by X[mm] from the reference and the cushion load is raised by P[kN], the amounts of oil M1 and M2 to be supplied to the lower chamber 12a of the hydraulic cylinder 12 are calculated by using the aforementioned equations [Math. 2] and [Math. 4], further acquires the rotation angles θ1 and θ2 of the drive motor 50 by using the equations [Math. 3] and [Math. 5] based on the calculated M1 and M2, and acquires a first speed command S1 for cushion position control and a second speed command S2 for cushion load control.

The rotational speed of the drive motor 50 is controlled through the speed controller 40 based on the speed command obtained by adding the first speed command S1 and the second speed command S2 so that the tip position (cushion position) of the cushion pin 14 can be lowered by X[mm] and the upward load (cushion load) of the cushion pin 14 can be raised by P[kN].

[Variation Examples of Cushion Position Control + Cushion Load Control]

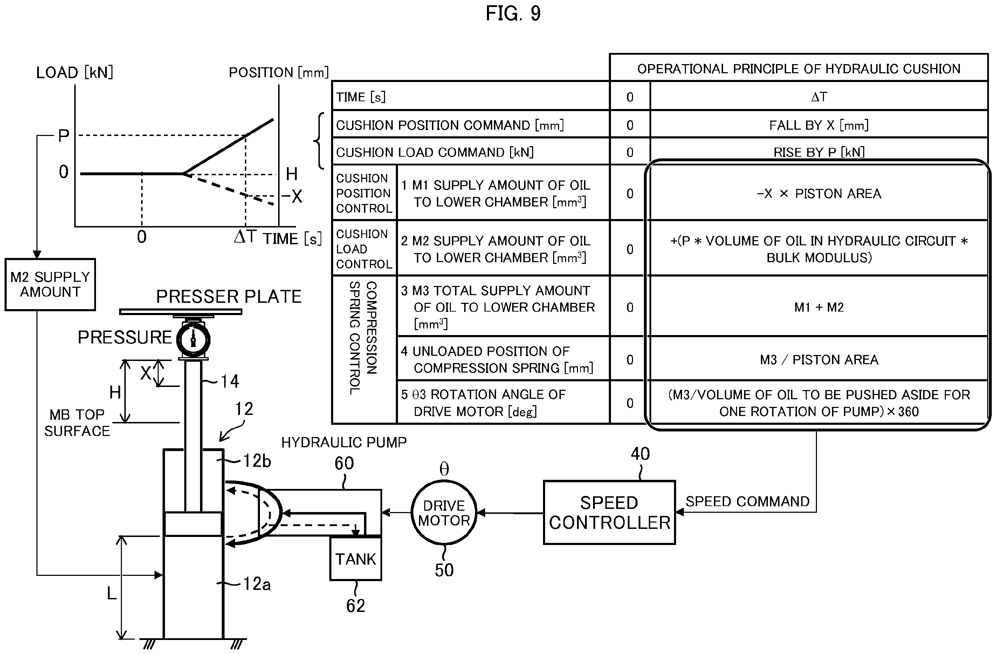

Fig. 9 is a diagram illustrating another example of a method for generating a speed command for controlling a cushion position and a cushion load by the die cushion control apparatus.

The method for generating a speed command illustrated in Fig. 9 is a variation example of the method for generating a speed command illustrated in Fig. 8, and the point that the amounts of oil M1 and M2 to be supplied to the lower chamber 12a of the hydraulic cylinder 12 are calculated in order to control the cushion position and the cushion load is the same as the method for generating a speed command illustrated in Fig. 8.

The method for generating a speed command illustrated in Fig. 9 converts the amount of oil M1 and the amount of oil M2 and calculates an amount of oil M3 (= M1 + M2) of the total oil supply amount to the lower chamber 12a of the hydraulic cylinder 12.

Assuming that the rotation angle of the drive motor 50 for supplying the amount of oil M3 to the lower chamber 12a of the hydraulic cylinder 12 is $\theta 3$, the rotation angle $\theta 3$ can be expressed by the following equation:

$$\theta 3 = (M3/\text{volume of oil to be pushed aside for one rotation of the hydraulic pump 60}) \times 360, \qquad \text{[Math. 6]}$$

and the angular speed $\omega 3$ is expressed as $\omega 3 = \theta 3/\Delta T$. Then, the die cushion control apparatus outputs a speed command indicating the angular speed $\omega 3$ to the speed controller 40.

The rotational speed of the drive motor 50 is controlled through the speed controller 40 based on the thus calculated speed command so that the tip position (cushion position) of the cushion pin 14 can be lowered by X[mm] and upward load (cushion load) of the cushion pin 14 can be raised by P[kN].

[Effects of Die Cushion Control Apparatus]

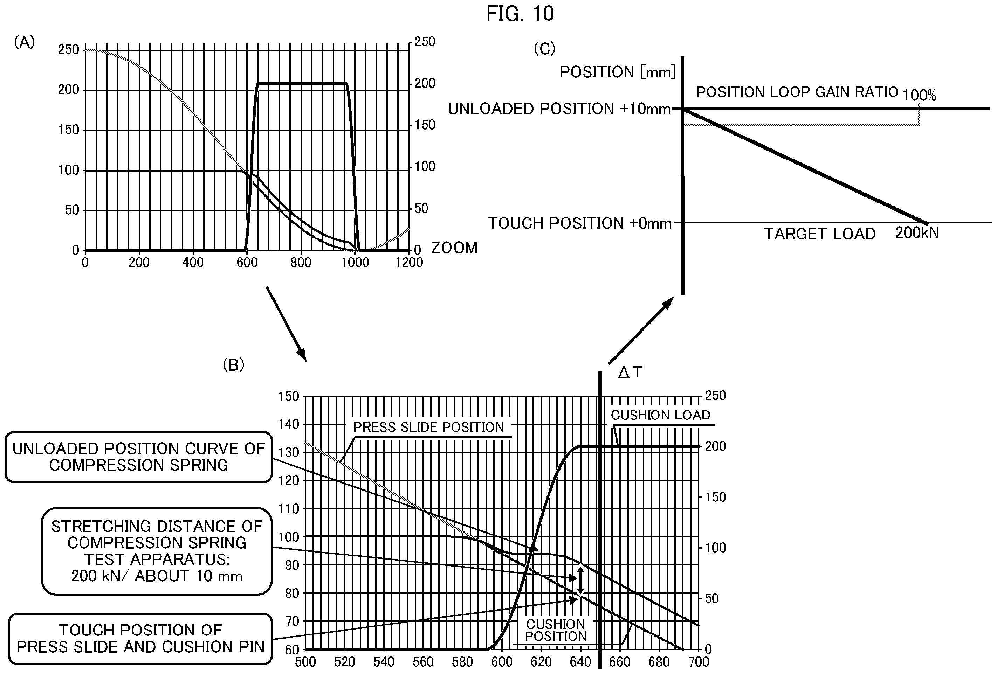

Fig. 10 is a graph illustrating a press slide position, a cushion position, a cushion load, and a cushion unloaded position, which is a graph illustrating an effect of the die cushion control apparatus according to the presently disclosed subject matter.

The graph illustrated in Fig. 10B is an enlarged graph of the main part of the graph illustrated in Fig. 10A.

Referring to Fig. 10, in order to operate the hydraulic cylinder as a compression spring, a loop gain for position control and a target value (cushion load command) for load control are changed. When the hydraulic cylinder 12 is pushed down by the press slide 4 and is at a touch position (a position where press-working is performed on a work 16), the cushion target load in the die cushion apparatus (test apparatus) of this example is equal to 200 [kN], resulting in a position loop gain equal to zero and achieving control following the set load (200 [kN]).

In a case where the press slide 4 and the cushion pin 14 are not in contact and no pressure (cushion load) occurs, the hydraulic cylinder 12 rises, but, as it rises, the target load (cushion load command) decreases gradually as in the graph illustrated in Fig. 10C, the target load reaches zero at the unloaded position, and the rise stops. In this example, when the cushion pin 14 rises by 10 [mm] relative to the touch position (reaching the cushion unloaded position), the cushion load command is equal to zero, and the cushion pin 14 is not pushed up beyond the cushion unloaded position.

Although the target load reaches zero at the cushion unloaded position and no position constraint force under the cushion load control works in this way, the position loop gain is 100%, and the cushion position control starts, restraining the tip position (cushion position) of the cushion pin 14 at the cushion unloaded position.

In the example illustrated in Fig. 10B, the press slide 4 is brought into contact with the tip position of the cushion pin 14 (the press slide position reaches the cushion position) and, after that, the deflection length of the compression spring gradually increases as the press slide 4 gradually falls. Then, when the press slide 4 reaches the touch position with the cushion pin 14, the deflection length is equal to the target deflection length (10 [mm] in this example), and the cushion load is equal to the target load (set load).

After that, when the press slide 4 further falls, the target deflection length is maintained. In other words, the cushion load is maintained at the set load during press-working.

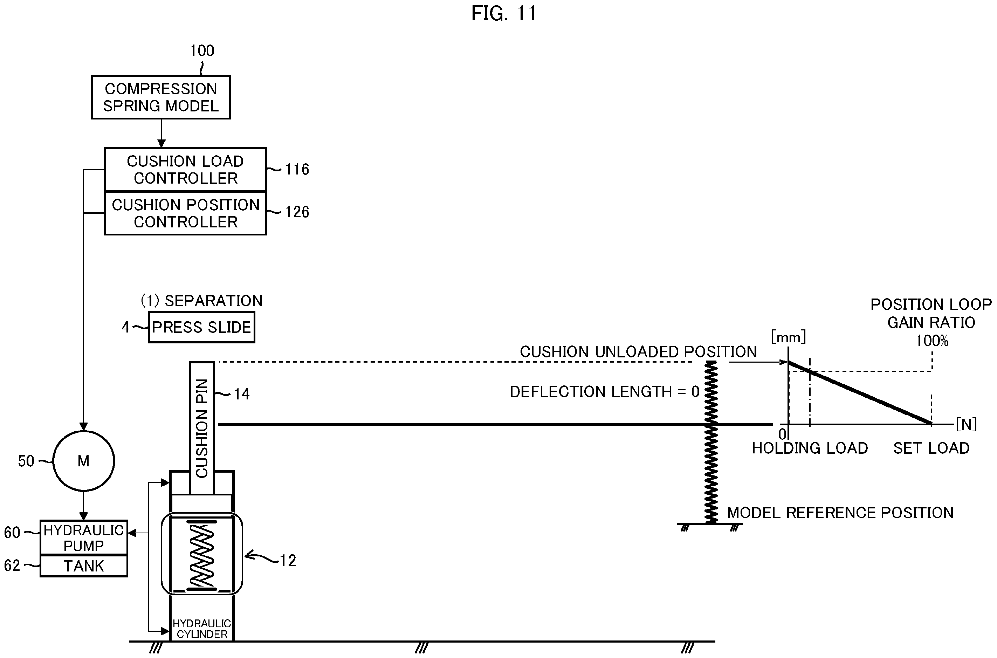

Each of Figs. 11 to 14 is a schematic diagram illustrating each operation state of the die cushion apparatus body and the like illustrated in Fig. 3. Therefore, the illustrations of the parts common to Fig. 3 are partially omitted from Figs. 11 to 14.

Fig. 11 is a schematic diagram illustrating a state that the press slide 4 is above the cushion pin 14 and is separated from the cushion pin 14.

In the separated state, position control is performed such that the cushion load command is equal to zero, the position loop gain ratio to the cushion position controller 126 is equal to 100%, and the tip position (cushion position) of the cushion pin 14 is held at the cushion unloaded position. Therefore, when assuming the hydraulic cylinder 12 is a compression spring, the deflection length of the compression spring is equal to zero.

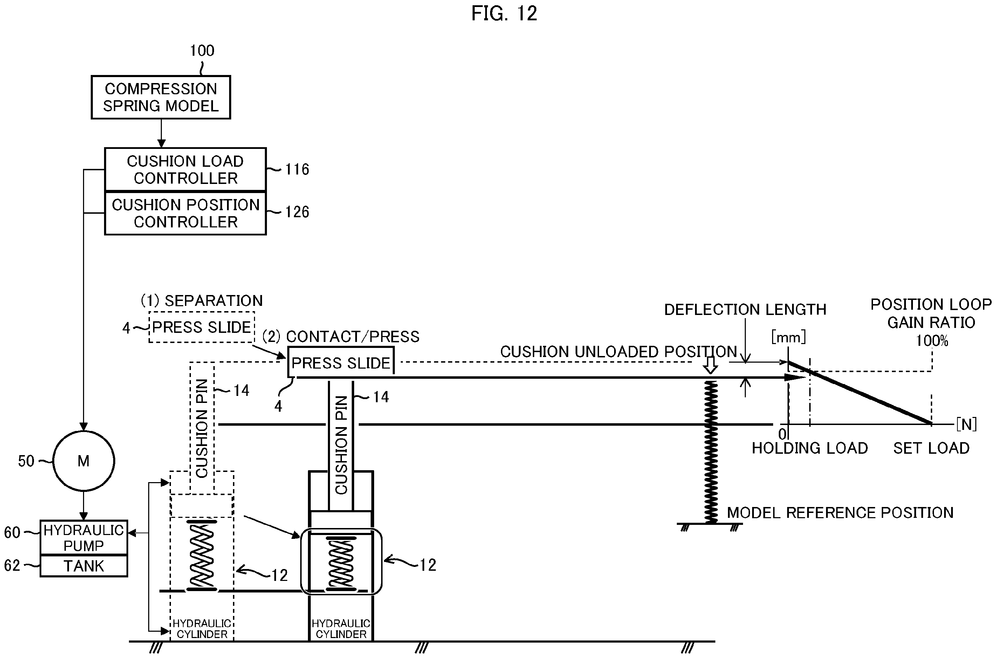

Fig. 12 is a schematic diagram illustrating a state that the press slide 4 is in contact with the cushion pin 14 and the cushion pin 14 is slightly pressed down.

In the contact/press-down state, the cushion load command is a load command depending on the compression spring characteristic, and, with the cushion load command depending on the compression spring characteristic (cushion load command corresponding to the deflection length), the upward load (cushion load) of the cushion pin 14 is controlled.

In other words, the hydraulic cylinder 12 is controlled so as to generate a cushion load corresponding to the deflection length of the compression spring. It should be noted that the length of the lower chamber 12a of the hydraulic cylinder 12 is shorter by the length corresponding to the deflection length of the compression spring relative to the separated state.

On the other hand, the position loop gain ratio to the cushion position controller 126 is equal to 0%, and the position constraint to the hydraulic cylinder 12 by the cushion position controller 126 does not work.

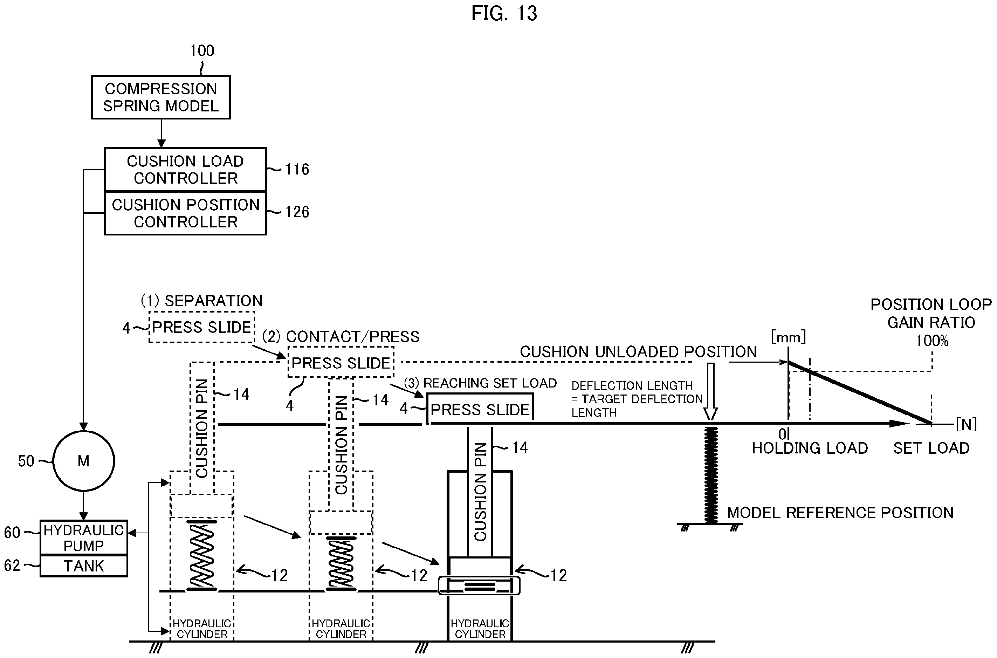

Fig. 13 is a schematic diagram illustrating a state that the press slide 4 further falls from the state illustrated in Fig. 12 and the cushion load reaches a set load.

In the state reaching the set load, the cushion load command is a cushion load command corresponding to the target deflection length, and, cushion load is controlled so as to be the set load.

It should be noted that the length of the lower chamber 12a of the hydraulic cylinder 12 is shorter by the length corresponding to the target deflection length relative to the separated state. Also, like the contact/press-down state, the position constraint to the hydraulic cylinder 12 by the cushion position controller 126 does not work.

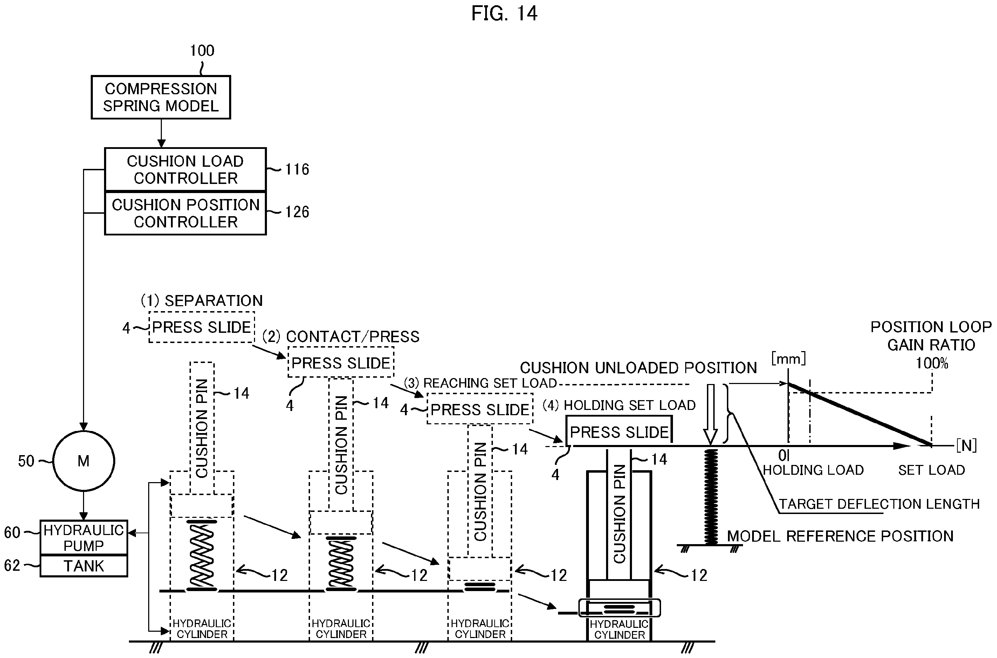

Fig. 14 is a schematic diagram illustrating a state that the press slide 4 further falls from the state illustrated in Fig. 13 and holds the set load during the fall (during press working).

In the state holding the set load, the cushion load command is held to be a cushion load command corresponding to the target deflection length, and, cushion load is controlled so as to be the set load.

Therefore, as the pressure of the lower chamber 12a of the hydraulic cylinder 12, the pressure upon reach of the set load illustrated in Fig. 13 is held. In other words, the hydraulic pump 60 driven by the drive motor 50 holds the pressure of the lower chamber 12a of the hydraulic cylinder 12 as the pressure corresponding to the set load and, at the same time, is driven to eject the amount of oil corresponding to the fall of the press slide 4 from the lower chamber 12a of the hydraulic cylinder 12.

[Comparison between Presently disclosed subject matter and Conventional Technologies]

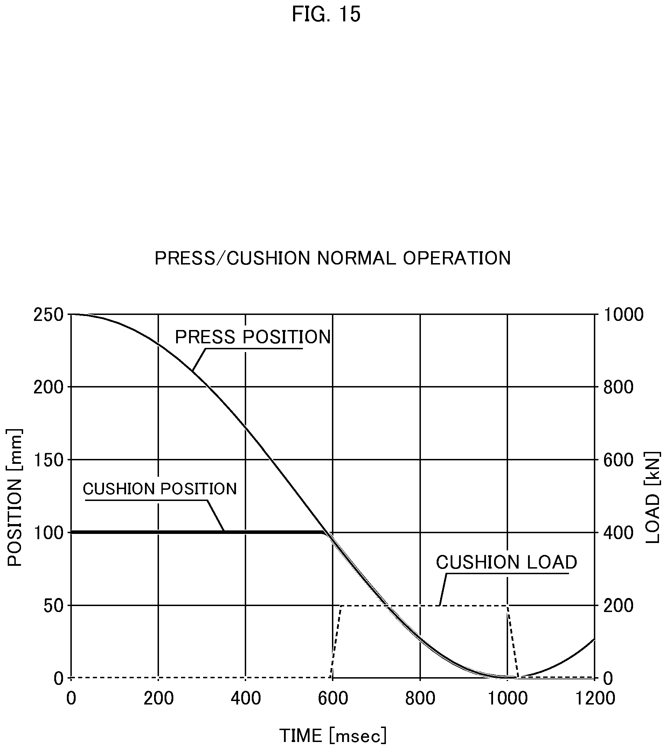

Fig. 15 is a graph illustrating an operation of each component in a case where a normal press-working operation is performed with a conventional die cushion control apparatus.

In an example of a normal operation illustrated in Fig. 15, at a time when the falling press position (the position of the lower surface of the upper die attached to the press slide 4) and the standby cushion position (100 [mm] in this example) are matched, the cushion control is switched from the cushion position control mode to the cushion load control mode, and press-working is performed with the set cushion load (200 [kN] in this example).

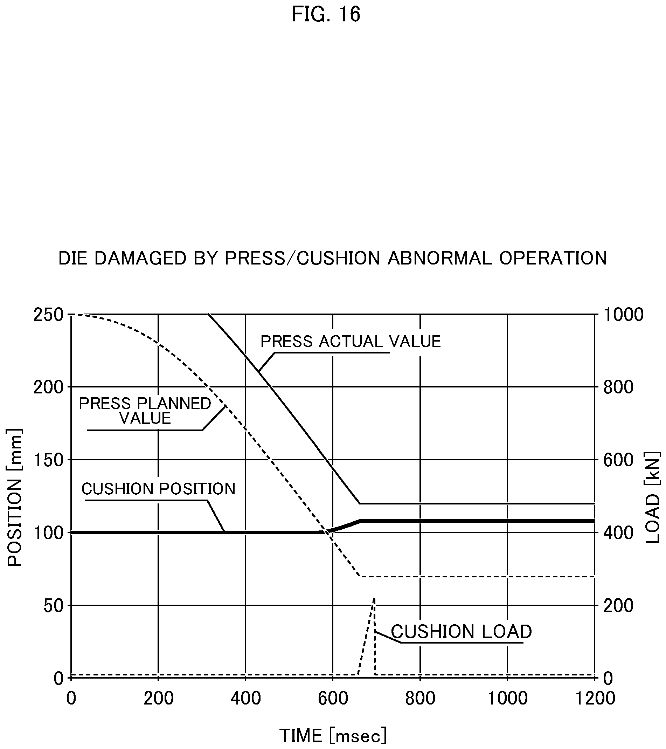

Fig. 16 is a graph illustrating an operation of each component in a case where an abnormal operation occurs with a conventional die cushion control apparatus.

The example illustrated in Fig. 16 is an example in which press-working is performed in a state that the press actual value of the press position is higher than the press planned value due to a die height setting error or the like for the press. A conventional cushion control apparatus starts the pressure application on the hydraulic oil in the lower chamber of the hydraulic cylinder for increasing the cushion load in timing of the start angle of the cushion load control, which is acquired from the crank axis encoder, but the cushion pin cannot be brought into contact with the upper die of the press slide, and the cushion position keeps rising beyond the standby position (100 [mm]).

The rising operation of the cushion is an abnormal detection condition, and the press system performs emergency stop, but the cushion pin keeps rising beyond the standby position (100 [mm]) (the cushion pin is pushed up beyond the standby position). The application of a steep cushion force upon pushing-up of the cushion pin (cushion load) may possibly damage the die and/or the work.

A measure that brings the abnormality detection timing forward may be considered as a damage prevention resolution, but it is difficult to manage the relationship between reduction of pressure and runaway stroke after the abnormality is detected. Also, a die design having room in consideration of runaway stroke upon occurrence of a cushion abnormality is necessary, which may cause a disadvantage such as an increased die cost.

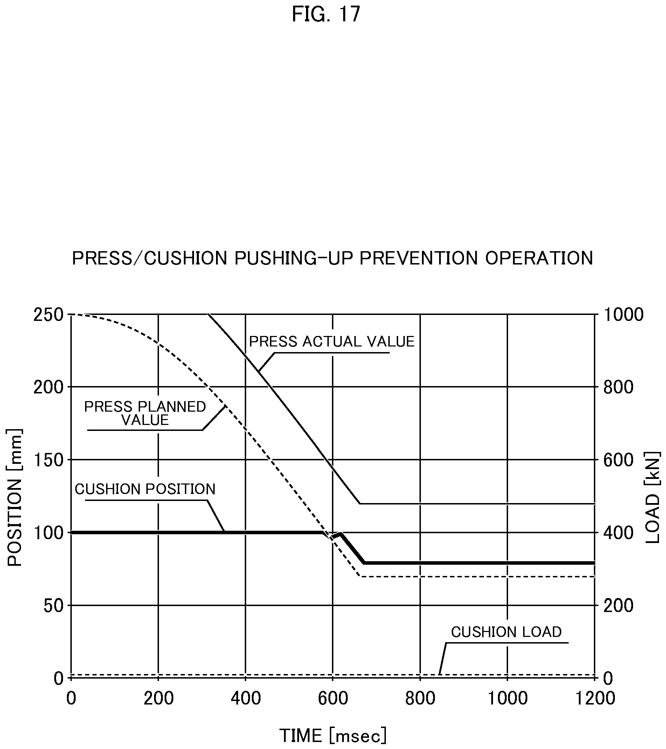

Fig. 17 is a graph illustrating an operation of each component in a case where a die cushion apparatus body is controlled by the die cushion control apparatus according to the presently disclosed subject matter.

The example illustrated in Fig. 17 is an example in which press-working is performed in a state that the press actual value of the press position is higher than the press planned value due to a die height setting error or the like for the press, like the example in Fig. 16.

Although the die cushion control apparatus according to the presently disclosed subject matter starts the pressure application on the hydraulic oil in the lower chamber 12a of the hydraulic cylinder 12 for increasing the cushion load in timing of the start angle of the cushion load control (press slide position of the press planned value), which is acquired from the crank axis encoder 5, when the cushion position reaches the cushion unloaded position that is the standby position (100 [mm]) even if the cushion pin 14 is not brought into contact with the upper die of the press slide 4, the cushion load command is zero, and the tip position (cushion position) of the cushion pin 14 does not rise beyond the cushion unloaded position.

Referring to the graph illustrating the cushion position in Fig. 17, when the cushion load control is started, the cushion position starts to rise but does not rise beyond the cushion unloaded position that is the standby position (100 [mm]), and the cushion load does not occur either.

Thus, a falling operation can be performed in accordance the planned/managed cushion operation so that damaging a die and so on can be prevented.

[Die Cushion Control Method]

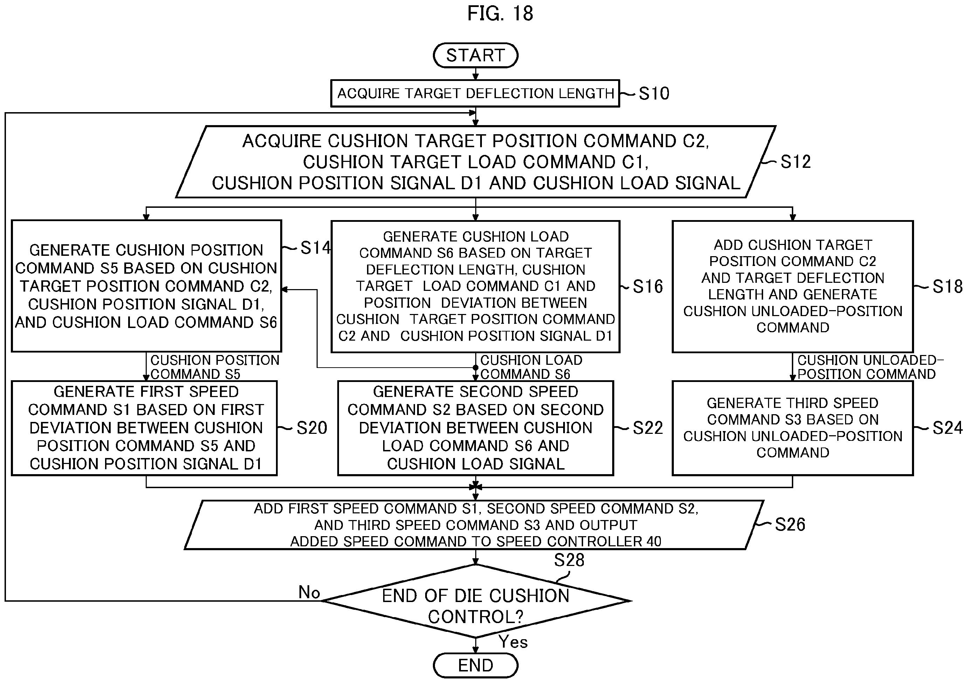

Fig. 18 is a flowchart illustrating an embodiment of a die cushion control method according to the presently disclosed subject matter.

It should be noted that the die cushion control method illustrated in Fig. 18 is a method to be performed by the processor 30 in the die cushion control apparatus illustrated in Fig. 1.

Referring to Fig. 18, the compression spring model 100 in the processor 30 acquires a target deflection length (step S10). The target deflection length may be acquired by performing calculation by the target deflection length calculator 101 (Fig. 4) or may be acquired by reading out the target deflection length that is calculated and stored in a storage unit in advance.

Then, based on a crank angle signal indicative of a crank angle detected by the crank axis encoder 5 or a slide position signal indicative of the position of the press slide 4 converted from the crank angle, each of a cushion target load command C1 and a cushion target position command C2 is acquired, a cushion position signal D1 is acquired from the position sensor 17, and a cushion load signal indicative of a cushion load converted from the pressure detected by the pressure sensor 18 is acquired (step S12).

In step S14, based on the cushion target position command C2, cushion position signal D1, and cushion load command acquired in step S12, a cushion position command S5 is generated. A cushion load command is a cushion load command S6 generated by step S16, and if the cushion load command S6 is less than or equal to the holding load of the blank holder 15 and so on, for example, the cushion target position command C2 is output as the cushion position command S5, and if it exceeds the holding load, the cushion position signal D1 is output as the cushion position command S5. Since, if the latter cushion position command S5 is output, the cushion position command S5 is matched with the cushion position signal D1, the cushion position control operates so as not to restrain the operation of the hydraulic cylinder 12.

Also, in step S16, based on the target deflection length acquired in step S10 and the cushion target load command C1, cushion target position command C2, and cushion position signal D1 acquired in step S12, a cushion load command S6 is generated. More specifically, a cushion load command S6 is calculated by the aforementioned equation [Math. 1]. Also, the "deflection length" in the equation [Math. 1] can be acquired by adding the target deflection length and a position deviation acquired by subtracting the cushion position signal D1 from the cushion target position command C2.

If the deflection length is equal to the target deflection length, the cushion load command S6 is the cushion target load command C1 (command indicating the set load), which is a command indicating a cushion load that decreases in proportion to the deflection length as the deflection length decreases and is a command indicative of cushion load command indicating 0 [kN] when the deflection length is equal to 0 [mm].

Further in step S18, the target deflection length acquired in step S10 and the cushion target position command C2 acquired in step S12 are added, and the added value is generated as a cushion unloaded-position command.

Next, in step S20, based on a deviation (first deviation) between the cushion position command S5 generated in step S14 and the cushion position signal D 1, a first speed command S1 necessary for handling the cushion position as a target position is generated.

The generation of the first speed command S1 is performed in the following manner. From the product of the first deviation and the piston area, the amount of oil M1 to be supplied to the hydraulic cylinder 12 is acquired (see the equation [Math. 2]). By dividing the amount of oil M1 by the ejected amount for one rotation of the hydraulic pump 60, the rotation angle $\theta$1 of the drive motor 50 for supplying the amount of oil M1 from the hydraulic pump 60 to the hydraulic cylinder 12 is calculated (see the equation [Math. 3]). Then, by acquiring the rotation angle $\theta$1 of the drive motor 50 based on the first deviation per unit time, a first speed command S1 for the drive motor 50 is generated.

Furthermore, in step S22, based on a deviation (second deviation) between the cushion load command S6 generated in step S16 and the cushion load signal acquired in step S12, a second speed command S2 necessary for handling the cushion load as a target load is generated.

The generation of the second speed command S2 is performed in the following manner. An amount of oil M2 to the hydraulic cylinder 12 necessary for rising the cushion load only by the second deviation is calculated based on the second deviation, the oil volume in the hydraulic circuit, and the bulk modulus of the hydraulic oil (see the equation [Math. 4]). By dividing the amount of oil M2 by the ejected amount for one rotation of the hydraulic pump 60, the rotation angle $\theta2$ of the drive motor 50 for supplying the amount of oil M2 from the hydraulic pump 60 to the hydraulic cylinder 12 is calculated (see the equation [Math. 5]). Then, by acquiring the rotation angle $\theta2$ of the drive motor 50 based on the second deviation per unit time, a second speed command S2 for the drive motor 50 is generated.

Further in step S24, a third speed command S3 is generated based on the cushion unloaded-position command generated by step S 18. The generation of the third speed command S3 is performed by acquiring a displacement of the hydraulic cylinder per unit time by performing time-differentiation on the cushion unloaded-position command and converting the displacement per unit time to the speed of the drive motor 50.

Next, the first speed command S1, the second speed command S2, and the third speed command S3 generated in steps S20, S22 and S24 are added to acquire a speed command, and the acquired speed command is output to the speed controller 40 (step S26).

Subsequently, the processor 30 determines whether the press-working (die cushion control) by the press machine ends or not, and if the die cushion control is to be continued (if "No"), returns to step S12 and repeats the processing from step S12 to step S28 while, if the die cushion control ends (if "Yes"), ends the processing (step S28).

[Others]

While one hydraulic cylinder 12 is provided in the die cushion apparatus of this embodiment, the number of the hydraulic cylinder 12 is not limited thereto. Also, while one set of the drive motor 50 + the hydraulic pump 60 is used for one hydraulic cylinder 12, the number is not limited thereto, and two or more sets may be provided in parallel for one hydraulic cylinder 12.

Also, having described the case where oil is used as hydraulic fluid for the hydraulic cylinder 12 and the hydraulic pump 60, the hydraulic fluid is not limited thereto, and water or other liquid may be used.

In the embodiment, hardware structures of processing units that execute various kinds of processing such as the processor 30 in the die cushion control apparatus, for example, are various processors as will be described below. The various processors include a central processing unit (CPU) that is a general purpose processor executing software (programs) and functioning as various processing units, a programmable logic device (PLD) that is a processor having a circuit configuration changeable after manufactured, such as a field programmable gate array (FPGA), and a dedicated electric circuit that is a processor having a circuit configuration designed specially for executing specific processing such as application specific integrated circuit (ASIC).

One processing unit may be configured by one of those various processors or may be configured by two or more processors of the same kind or of different kinds (such as FPGAs or a combination of a CPU and an FPGA, for example). Also, processing units may be configured by one processor. As an example in which processing units are configured by one processor, first, there is an aspect in which one processor is configured by a combination of one or more CPUs and software, as typified by a computer such as a client or a server, where the processor functions as processing units. Secondly, there is an aspect in which a processor is used which applies an integrated circuit (IC) chip to implement functionality of an entire system including processing units as typified by a system on chip (SoC). In this way, various processing units are configured by employing one or more of the various processors as described above as the hardware structure.

Further, a hardware structure of those various processors is, more specifically, an electric circuitry in which circuit elements such as semiconductor elements are combined.

Further, the presently disclosed subject matter is not limited to the aforementioned embodiments, and, needless to say, various variations are possible without departing from the scope and spirit of the presently disclosed subject matter.

Reference Signs List

1: press machine, 2: crank axis, 3: connecting rod, 4: press slide, 5: crank axis encoder, 10: die cushion apparatus body, 12: hydraulic cylinder, 14: cushion pin, 15: blank holder, 16: work, 17: position sensor, 18: pressure sensor, 20: cushion target load command device, 22: cushion target position command device, 30: processor, 40: speed controller, 50: drive motor, 60: hydraulic pump, 62: tank, 100: compression spring model, 101: target deflection length calculator, 102: cushion load command generator, 103, 105, 112, 118, 122: adder, 104: motor speed converter, 106: cushion position command generator, 107: hydraulic circuit parameter, 110: cushion load command delay unit, 114: cushion load converter, 116: cushion load controller, 120: cushion position command delay unit, and 126: cushion position controller

**Claims**

1. A die cushion control apparatus (30, 40) for a die cushion apparatus (10), the die cushion apparatus (10) comprising: a hydraulic cylinder that supports a cushion load generating member that generates a cushion load; a hydraulic cylinder drive device that includes a drive motor and a hydraulic pump to be driven by the drive motor and that drives the hydraulic cylinder; a cushion target position command device and a cushion target load command device that output a cushion target position command and a cushion target load command, respectively, in accordance with a crank angle of a press machine or a position of a press slide; a position sensor that detects a position of the cushion load generating member as a cushion position; and a pressure sensor that detects a pressure of a lower chamber of the hydraulic cylinder, wherein

   the die cushion control apparatus (30, 40) includes a processor (30) and a controller (40) that controls the drive motor in accordance with an input control command;
   the processor (30):

      assuming that the hydraulic cylinder includes a compression spring model, acquires a deflection length of a compression spring as a target deflection length when an upward load of the cushion load generating member is equal to a set load that is set in advance;
      generates a cushion load command or a pressure command obtained by converting the cushion load command with a cylinder area based on the cushion target load command, the target deflection length, the cushion target position command, and the cushion position; and
      generates the control command based on a second deviation between the cushion load command and a cushion load converted from a pressure detected by the pressure sensor or a second deviation between the pressure command and the pressure detected by the pressure sensor.

2. The die cushion control apparatus (30, 40) according to claim 1, wherein the processor (30) calculates the deflection length of the compression spring based on the cushion target position command, the target deflection length, and the cushion position and calculates the cushion load command based on the calculated deflection length and the target deflection length and the cushion target position command by the following equation:

   cushion load command = (cushion target load command/target deflection length) $\times$ deflection length.

3. The die cushion control apparatus (30, 40) according to claim 1, wherein the processor (30):

      generates a cushion position command based on the cushion target position command and the cushion position, and
      generates the control command based on a first deviation between the cushion position command and the cushion position.

4. The die cushion control apparatus (30, 40) according to claim 3, wherein
   the processor (30) generates the cushion target position command as the cushion position command if the cushion load command or the pressure command is less than or equal to zero or a predetermined value that is set in advance and generates the cushion position as the cushion position command if the cushion load command or the pressure command is greater than zero or the predetermined value.

5. The die cushion control apparatus (30, 40) according to claim 4, the processor (30):

      calculates a first supply amount of hydraulic fluid to be fed to an upper chamber or lower chamber of the hydraulic cylinder which is necessary for causing the position of the cushion load generating member to reach a cushion position corresponding to the cushion position command based on the first deviation and calculates a second supply amount of the hydraulic fluid to be fed to the lower chamber of the hydraulic cylinder which is necessary for causing the upward load of the cushion load generating member to reach a cushion load corresponding to the cushion load command based on the second deviation, and
      calculates a rotation angle of the drive motor based on the first supply amount and the second supply amount and an ejected amount of the hydraulic fluid for one rotation of the hydraulic pump and generates the control command based on the rotation angle.

6. The die cushion control apparatus (30, 40) according to any one of claims 3 to 5, wherein the processor (30) includes:

a cushion position controller (126) that generates a first speed command based on the first deviation; and
the cushion position controller (126) or a pressure controller (116) that generates a second speed command based on the second deviation, and
the processor (30) generates the control command by adding the first speed command and the second speed command.

7. The die cushion control apparatus (30, 40) according to claim 6, wherein the processor (30):

generates a cushion unloaded-position command obtained by adding the cushion target position command and the target deflection length;
generates a third speed command based on the cushion unloaded-position command; and
generates the control command by adding the first speed command, the second speed command, and the third speed command.

8. The die cushion control apparatus (30, 40) according to claim 7, wherein the processor (30) acquires a displacement of the hydraulic cylinder per unit time by performing time-differentiation on the cushion unloaded-position command and converts the displacement per unit time to the speed of the drive motor to generate the third speed command.

9. The die cushion control apparatus (30, 40) according to claim 7, the processor (30) includes a delay unit (110, 120) that delays the cushion position command to be used for calculating the first deviation and the cushion load command or the pressure command to be used for calculating the second deviation.

10. The die cushion control apparatus (30, 40) according to any one of claims 1 to 5, wherein the processor (30) calculates the target deflection length based on hydraulic circuit parameters including flow path volume information on a hydraulic circuit including the hydraulic cylinder, a bulk modulus of the hydraulic fluid and a cylinder diameter of the hydraulic cylinder and the set load.

11. The die cushion control apparatus (30, 40) according to any one of claims 1 to 5, wherein the processor (30) calculates the target deflection length based on a spring coefficient of the compression spring and the set load.

12. A die cushion apparatus (10) comprising the die cushion control apparatus (30, 40) according to any one of claims 1 to 11.

13. A die cushion control method for a die cushion control apparatus (30, 40) for a die cushion apparatus (10), the die cushion apparatus (10) including: a hydraulic cylinder that supports a cushion load generating member that generates a cushion load; a hydraulic cylinder drive device that includes a drive motor and a hydraulic pump to be driven by the drive motor and that drives the hydraulic cylinder; a cushion target position command device and a cushion target load command device that output a cushion target position command and a cushion target load command, respectively, in accordance with a crank angle of a press machine or a position of a press slide; a position sensor that detects a position of the cushion load generating member as a cushion position; and a pressure sensor that detects a pressure of a lower chamber of the hydraulic cylinder, wherein
a processor (30) performs the steps of:

assuming that the hydraulic cylinder includes a compression spring model, acquiring a deflection length of a compression spring as a target deflection length when an upward load of the cushion load generating member is equal to a set load that is set in advance;
generating a cushion load command or a pressure command obtained by converting the cushion load command with a cylinder area based on the cushion target load command, the target deflection length, the cushion target position command, and the cushion position;
generating a control command based on a second deviation between the cushion load command and a cushion load converted from a pressure detected by the pressure sensor or a second deviation between the pressure command and the pressure detected by the pressure sensor; and
outputting the generated control command to a speed controller that controls the drive motor.

14. The die cushion control method according to claim 13, wherein the processor (30) calculates the deflection length of the compression spring based on the cushion target position command, the target deflection length, and the cushion position and calculates the cushion load command based on the calculated deflection length and the target deflection length and the cushion target position command by the following equation:

cushion load command = (cushion target load command/target deflection length) × deflection length.

15. The die cushion control method according to claim 13, comprising the steps of:

by the processor (30), generating a cushion position command based on the cushion target position command and the cushion position, and
by the processor (30), generating the control command based on a first deviation between the cushion position command and the cushion position,
optionally, the processor (30) generates the cushion target position command as the cushion position command if the cushion load command or the pressure command is less than or equal to zero or a predetermined value that is set in advance and generates the cushion position as the cushion position command if the cushion load command or the pressure command is greater than zero or the predetermined value,
optionally, the method comprising the steps of:

by the processor (30), calculating a first supply amount of hydraulic fluid to be fed to an upper chamber or lower chamber of the hydraulic cylinder which is necessary for causing the position of the cushion load generating member to reach a cushion position corresponding to the cushion position command based on the first deviation and calculating a second supply amount of the hydraulic fluid to be fed to the lower chamber of the hydraulic cylinder which is necessary for causing the upward load of the cushion load generating member to reach a cushion load corresponding to the cushion load command based on the second deviation; and
by the processor (30), calculating a rotation angle of the drive motor based on the first supply amount and the second supply amount and an ejected amount of the hydraulic fluid for one rotation of the hydraulic pump and generates the control command based on the rotation angle,
optionally, the processor (30) performs the steps of:

generating a first speed command based on the first deviation;
generating a second speed command based on the second deviation; and
generating the control command by adding the first speed command and the second speed command,
optionally, the processor (30) performs the steps of:

generating a cushion unloaded-position command obtained by adding the cushion target position command and the target deflection length;
generating a third speed command based on the cushion unloaded-position command; and
generating the control command by adding the first speed command, the second speed command, and the third speed command,
optionally, the processor (30) calculates a displacement of the hydraulic cylinder per unit time by performing time-differentiation on the cushion unloaded-position command and converts the calculated displacement to the speed of the drive motor to generate the third speed command.

# FIG. 1

EP 4 574 294 A1

## FIG. 2

PRESS SLIDE 4

CUSHION UNLOADED POSITION

CUSHION PIN 14

12

12b

12a

HYDRAULIC CYLINDER

TARGET DEFLECTION LENGTH

[mm]

0

SET LOAD

[N]

EP 4 574 294 A1

FIG. 3

FIG. 4

EP 4 574 294 A1

FIG. 5

[FLOW OF OIL]

→ UPPER CHAMBER →LOWER CHAMBER:
CYLINDER RISE / CUSHION LOAD INCREASED

- - → LOWER CHAMBER →UPPER CHAMBER:
CYLINDER FALL / CUSHION LOAD DECREASED

5 CRANK AXIS ENCODER

4 PRESS SLIDE

17 POSITION SENSOR

30 PROCESSOR

40 SPEED CONTROLLER

60 HYDRAULIC PUMP

50 DRIVE MOTOR

62 TANK

18 PRESSURE SENSOR

14

12

12b

12a

HYDRAULIC CYLINDER

# FIG. 6

POSITION [mm]

| | | OPERATIONAL PRINCIPLE OF HYDRAULIC CUSHION | |
|---|---|---|---|
| TIME [s] | | 0 | ΔT |
| CUSHION POSITION COMMAND [mm] | | 0 | FALL BY X [mm] |
| POSITION CONTROL | 1 TARGET POSITION OF CUSHION POSITION [mm] | 0 (H) | −X |
| | 2 HEIGHT OF LOWER CHAMBER [mm] | 0 (L) | −X |
| | 3 M1 SUPPLY AMOUNT OF OIL TO LOWER CHAMBER [mm³] | 0 | −X × PISTON AREA |
| | 4 θ1 ROTATION ANGLE OF DRIVE MOTOR [deg] | 0 | (M1/VOLUME OF OIL TO BE PUSHED ASIDE FOR ONE ROTATION OF PUMP) × 360 |

M1 SUPPLY AMOUNT

MB TOP SURFACE

HYDRAULIC PUMP
60

θ1
DRIVE MOTOR
50

40
SPEED CONTROLLER

SPEED COMMAND

TANK
62

EP 4 574 294 A1

## FIG. 7

**LOAD [kN]**

| | | | OPERATIONAL PRINCIPLE OF HYDRAULIC CUSHION | |
|---|---|---|---|---|
| TIME [s] | | 0 | $\Delta T$ | |
| CUSHION LOAD COMMAND [kN] | | 0 | BOOST BY P [kN] | |
| PRESSURE CONTROL | 1 M2 SUPPLY AMOUNT OF OIL TO LOWER CHAMBER [mm³] | 0 | +(P * VOLUME OF OIL IN HYDRAULIC CIRCUIT * BULK MODULUS) | |
| | 2 θ2 ROTATION ANGLE OF DRIVE MOTOR [deg] | 0 | (M2/VOLUME OF OIL TO BE PUSHED ASIDE FOR ONE ROTATION OF PUMP) × 360 | |

EP 4 574 294 A1

**FIG. 8**

| | | OPERATIONAL PRINCIPLE OF HYDRAULIC CUSHION |
|---|---|---|
| TIME [s] | 0 | ΔT |
| CUSHION POSITION COMMAND [mm] | 0 | FALL BY X [mm] |
| CUSHION LOAD COMMAND [kN] | 0 | RISE BY P [kN] |
| CUSHION POSITION CONTROL — 1 M1 SUPPLY AMOUNT OF OIL TO LOWER CHAMBER [mm³] | 0 | −X × PISTON AREA |
| CUSHION POSITION CONTROL — 2 θ1 ROTATION ANGLE OF DRIVE MOTOR [deg] | 0 | (M1/VOLUME OF OIL TO BE PUSHED ASIDE FOR ONE ROTATION OF PUMP) × 360 |
| CUSHION LOAD CONTROL — 1 M2 SUPPLY AMOUNT OF OIL TO LOWER CHAMBER [mm³] | 0 | +(P * VOLUME OF OIL IN HYDRAULIC CIRCUIT * BULK MODULUS) |
| CUSHION LOAD CONTROL — 2 θ2 ROTATION ANGLE OF DRIVE MOTOR [deg] | 0 | (M2/VOLUME OF OIL TO BE PUSHED ASIDE FOR ONE ROTATION OF PUMP) × 360 |

LOAD [kN]

POSITION [mm]

H

−X

P

0

0    ΔT    TIME [s]

M2 SUPPLY AMOUNT

PRESSER PLATE

PRESSURE

14

12

12b

12a

H

X

MB TOP SURFACE

L

40 — SPEED CONTROLLER

SPEED COMMAND

DRIVE MOTOR — 50

θ

HYDRAULIC PUMP — 60

TANK — 62

# FIG. 9

| | OPERATIONAL PRINCIPLE OF HYDRAULIC CUSHION | | |
|---|---|---|---|
| TIME [s] | | 0 | $\Delta T$ |
| CUSHION POSITION COMMAND [mm] | | 0 | FALL BY X [mm] |
| CUSHION LOAD COMMAND [kN] | | 0 | RISE BY P [kN] |
| CUSHION POSITION CONTROL | 1 M1 SUPPLY AMOUNT OF OIL TO LOWER CHAMBER [mm³] | 0 | $-X \times$ PISTON AREA |
| CUSHION LOAD CONTROL | 2 M2 SUPPLY AMOUNT OF OIL TO LOWER CHAMBER [mm³] | 0 | +(P * VOLUME OF OIL IN HYDRAULIC CIRCUIT * BULK MODULUS) |
| COMPRESSION SPRING CONTROL | 3 M3 TOTAL SUPPLY AMOUNT OF OIL TO LOWER CHAMBER [mm³] | 0 | M1 + M2 |
| | 4 UNLOADED POSITION OF COMPRESSION SPRING [mm] | 0 | M3 / PISTON AREA |
| | 5 θ3 ROTATION ANGLE OF DRIVE MOTOR [deg] | 0 | (M3/VOLUME OF OIL TO BE PUSHED ASIDE FOR ONE ROTATION OF PUMP) × 360 |

EP 4 574 294 A1

## FIG. 10

(A)

ZOOM

(C)

POSITION [mm]

POSITION LOOP GAIN RATIO 100%

UNLOADED POSITION +10mm

TOUCH POSITION +0mm

TARGET LOAD    200kN

(B)

UNLOADED POSITION CURVE OF COMPRESSION SPRING

STRETCHING DISTANCE OF COMPRESSION SPRING TEST APPARATUS: 200 kN/ ABOUT 10 mm

TOUCH POSITION OF PRESS SLIDE AND CUSHION PIN

ΔT

PRESS SLIDE POSITION

CUSHION LOAD

CUSHION POSITION

EP 4 574 294 A1

FIG. 11

100

COMPRESSION
SPRING MODEL

CUSHION LOAD
CONTROLLER — 116

CUSHION POSITION
CONTROLLER — 126

(1) SEPARATION

4 — PRESS SLIDE

CUSHION PIN — 14

50 — M

60 — HYDRAULIC
PUMP

62 — TANK

HYDRAULIC
CYLINDER

12

CUSHION UNLOADED POSITION

DEFLECTION LENGTH = 0

MODEL REFERENCE POSITION

POSITION LOOP
GAIN RATIO
100%

[mm]

0          [N]

HOLDING LOAD    SET LOAD

FIG. 12

EP 4 574 294 A1

FIG. 13

FIG. 14

# FIG. 15

## PRESS/CUSHION NORMAL OPERATION

## FIG. 16

DIE DAMAGED BY PRESS/CUSHION ABNORMAL OPERATION

## FIG. 17

### PRESS/CUSHION PUSHING-UP PREVENTION OPERATION

## FIG. 18

START

ACQUIRE TARGET DEFLECTION LENGTH — S10

ACQUIRE CUSHION TARGET POSITION COMMAND C2,
CUSHION TARGET LOAD COMMAND C1,
CUSHION POSITION SIGNAL D1 AND CUSHION LOAD SIGNAL — S12

GENERATE CUSHION POSITION
COMMAND S5 BASED ON CUSHION
TARGET POSITION COMMAND C2,
CUSHION POSITION SIGNAL D1,
AND CUSHION LOAD COMMAND S6 — S14

GENERATE CUSHION LOAD
COMMAND S6 BASED ON TARGET
DEFLECTION LENGTH, CUSHION
TARGET LOAD COMMAND C1 AND
POSITION DEVIATION BETWEEN
CUSHION TARGET POSITION COMMAND
C2 AND CUSHION POSITION SIGNAL D1 — S16

ADD CUSHION TARGET
POSITION COMMAND C2
AND TARGET DEFLECTION
LENGTH AND GENERATE
CUSHION UNLOADED-POSITION
COMMAND — S18

CUSHION POSITION
COMMAND S5

CUSHION LOAD
COMMAND S6

CUSHION UNLOADED-
POSITION COMMAND

GENERATE FIRST SPEED
COMMAND S1 BASED ON FIRST
DEVIATION BETWEEN CUSHION
POSITION COMMAND S5 AND
CUSHION POSITION SIGNAL D1 — S20

GENERATE SECOND SPEED
COMMAND S2 BASED ON SECOND
DEVIATION BETWEEN CUSHION
LOAD COMMAND S6 AND
CUSHION LOAD SIGNAL — S22

GENERATE THIRD SPEED
COMMAND S3 BASED ON
CUSHION UNLOADED-POSITION
COMMAND — S24

ADD FIRST SPEED COMMAND S1, SECOND SPEED COMMAND S2,
AND THIRD SPEED COMMAND S3 AND OUTPUT
ADDED SPEED COMMAND TO SPEED CONTROLLER 40 — S26

S28

No — END OF DIE CUSHION CONTROL?

Yes

END

EP 4 574 294 A1

Europäisches
Patentamt

European
Patent Office

Office européen
des brevets

## EUROPEAN SEARCH REPORT

**Application Number**

EP 24 21 9470

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2011/045113 A1 (MIYASAKA TAKUJI [JP] ET AL) 24 February 2011 (2011-02-24) * the whole document * | 1-15 | INV. B21D24/02 G05B19/416 G05B19/19 |
| A | US 2019/270129 A1 (KOHNO YASUYUKI [JP]) 5 September 2019 (2019-09-05) * the whole document * | 1-15 | |
| A | US 2009/078016 A1 (SUZUKI YUICHI [JP]) 26 March 2009 (2009-03-26) * the whole document * | 1-15 | |

TECHNICAL FIELDS
SEARCHED        (IPC)

B21D
G05B

The present search report has been drawn up for all claims

| Place of search | Date of completion of the search | Examiner |
|---|---|---|
| The Hague | 6 May 2025 | Marinica, Raluca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 9470

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| US 2011045113 A1 | 24-02-2011 | CN 102036765 A | 27-04-2011 |
| | | DE 112009001109 T5 | 14-04-2011 |
| | | JP 5296415 B2 | 25-09-2013 |
| | | JP 2009279620 A | 03-12-2009 |
| | | KR 20100124837 A | 29-11-2010 |
| | | US 2011045113 A1 | 24-02-2011 |
| | | WO 2009142132 A1 | 26-11-2009 |
| US 2019270129 A1 | 05-09-2019 | CN 110227751 A | 13-09-2019 |
| | | EP 3536415 A1 | 11-09-2019 |
| | | JP 6646697 B2 | 14-02-2020 |
| | | JP 2019150854 A | 12-09-2019 |
| | | US 2019270129 A1 | 05-09-2019 |
| US 2009078016 A1 | 26-03-2009 | CN 101142038 A | 12-03-2008 |
| | | DE 112006000606 T5 | 31-01-2008 |
| | | JP 4820564 B2 | 24-11-2011 |
| | | JP 2006255743 A | 28-09-2006 |
| | | US 2009078016 A1 | 26-03-2009 |
| | | WO 2006098257 A1 | 21-09-2006 |

EPO FORM P0459

For more details about this annex : see Official Journal of the European Patent Office, No. 12/82

**EP 4 574 294 A1**

**Patent documents cited in the description**

- JP 2009279620 A

- JP 2017225998 A